# EUROPEAN PATENT APPLICATION

(11) **EP 4 836 487 A1**
(43) Date of publication of application: **04.11.2026**
(21) Application number: 23962545.2
(22) Date of filing: 26.12.2023
(51) Int. Cl.: H04W 24/02

(54) **SENSING METHOD, APPARATUS AND DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN)
(74) Representative: RGTH
(86) International application number: PCT/CN2023/141812
(87) International publication number: WO 2025/137847

(57) **Abstract**

The present application relates to the field of sensing, and discloses a sensing method, apparatus and device, and a storage medium. The method is executed by a terminal device. The method comprises: receiving first information, the first information comprising configuration information related to sensing. The configuration information related to sensing is configured for a UE, so that the UE can execute a sensing service on the basis of the expectation and instruction of a network side, preventing the UE from performing meaningless, repetitive and redundant operations to waste power consumption, preventing the UE from exchanging meaningless, repetitive and redundant signaling or data with the network side to waste air interface resources, and helping to achieve the effects of saving energy and saving air interface resources.

## Description

### TECHNICAL FIELD

The present application relates to the field of sensing, and more particularly, to a sensing method, a sensing apparatus, a sensing device, and a storage medium.

### BACKGROUND

Sensing information required for a sensing service has a highly rich hierarchy, and data volume of the sensing information is relatively large. Transmitting the sensing information through an air interface will result in substantial air interface resource overhead. The calculation of a sensing result requires substantial calculating resources. If a terminal device calculates the sensing result, it will also lead to severe power consumption issues on a terminal device side.

Therefore, it is necessary to design a reasonable sensing method to ensure the effect of power saving and air interface resource overhead saving.

### SUMMARY

Embodiments of the present application provide a sensing method, a sensing apparatus, a sensing device, and a storage medium. The technical solutions are as follows.

According to one aspect of the embodiments of the present application, a sensing method is provided. The method is performed by a terminal device, and the method includes:
receiving first information, where the first information includes configuration information related to sensing.

According to one aspect of the embodiments of the present application, a sensing method is provided. The method is performed by an access network device, and the method includes:
receiving first information, where the first information includes configuration information related to sensing.

According to one aspect of the embodiments of the present application, a sensing method is provided. The method is performed by a core network element, and the method includes:
transmitting first information, where the first information includes configuration information related to sensing.

According to one aspect of the embodiments of the present application, a sensing apparatus is provided, and the apparatus includes: a receiving module, configured to receive first information, where the first information includes configuration information related to sensing.

According to one aspect of the embodiments of the present application, a sensing apparatus is provided, and the apparatus includes: a transmitting module, configured to transmit first information, where the first information includes configuration information related to sensing.

According to one aspect of the present application, a sensing device is provided, and the communication device includes: a processor, a transceiver connected to the processor, and a memory configured to store executable instructions of the processor, where the processor is configured to load and execute the executable instructions to implement the sensing method as described above.

According to one aspect of the present application, a computer-readable storage medium is provided, where the storage medium stores a computer program, the computer program is configured to be executed by a processor to implement the aforementioned sensing method.

According to one aspect of the present application, a chip is provided, where the chip includes a programmable logic circuit and/or program instructions, and when running, the chip is configured to implement the aforementioned sensing method.

According to one aspect of the present application, a computer program product is provided, where the computer program product includes computer instructions, the computer instructions are stored in a computer-readable storage medium, a processor obtains the computer instructions from the computer-readable storage medium and executes the computer instructions to implement the aforementioned sensing method.

The technical solutions provided in the embodiments of the present application may bring about the following beneficial effects:
since configuration information related to sensing is configured for the UE, the UE is enabled to perform a sensing service based on expectation and indication of a network side, thereby avoiding the UE from performing meaningless, repetitive, and redundant operations that waste power consumption, and avoiding the UE from exchanging meaningless, repetitive, and redundant signaling or data with the network side that waste air interface resources, thus helping to achieve the effects of power saving and air interface resource saving.

### BRIEF DESCRIPTION OF THE DRAWINGS

To illustrate the technical solutions in the embodiments of the present application more clearly, the accompanying drawings required for describing the embodiments are briefly introduced below. It is apparent that the drawings in the following description are merely some embodiments of the present application, and a person of ordinary skill in the art can obtain other drawings according to these drawings without creative effort.
FIG. 1 illustrates a schematic diagram of a communication system architecture provided in an exemplary embodiment of the present application.
FIG. 2 illustrates a schematic diagram of a communication system architecture provided in an exemplary embodiment of the present application.
FIG. 3 illustrates a schematic diagram of a sensing and communication scenario provided in an exemplary embodiment of the present application.
FIG. 4 illustrates a schematic diagram of a wireless sensing mode provided in an exemplary embodiment of the present application.
FIG. 5 illustrates a flow diagram of a sensing method provided in an exemplary embodiment of the present application.
FIG. 6 illustrates a flow diagram of a sensing method provided in an exemplary embodiment of the present application.
FIG. 7 illustrates a schematic diagram of network coverage provided in an exemplary embodiment of the present application.
FIG. 8 illustrates a flow diagram of a sensing method provided in an exemplary embodiment of the present application.
FIG. 9 illustrates a flow diagram of a sensing method provided in an exemplary embodiment of the present application.
FIG. 10 illustrates a flow diagram of a sensing method provided in an exemplary embodiment of the present application.
FIG. 11 illustrates a flow diagram of a sensing method provided in an exemplary embodiment of the present application.
FIG. 12 illustrates a flow diagram of a sensing method provided in an exemplary embodiment of the present application.
FIG. 13 illustrates a flow diagram of a sensing method provided in an exemplary embodiment of the present application.
FIG. 14 illustrates a flow diagram of a sensing method provided in an exemplary embodiment of the present application;
FIG. 15 illustrates a flow diagram of a sensing method provided in an exemplary embodiment of the present application.
FIG. 16 illustrates a flow diagram of a sensing method provided in an exemplary embodiment of the present application.
FIG. 17 illustrates a flow diagram of a sensing method provided in an exemplary embodiment of the present application.
FIG. 18 illustrates a flow diagram of a sensing method provided in an exemplary embodiment of the present application.
FIG. 19 illustrates a flow diagram of a sensing method provided in an exemplary embodiment of the present application.
FIG. 20 illustrates a flow diagram of a sensing method provided in an exemplary embodiment of the present application.
FIG. 21 illustrates a flow diagram of a sensing method provided in an exemplary embodiment of the present application.
FIG. 22 illustrates a structural diagram of a sensing apparatus provided in an exemplary embodiment of the present application.
FIG. 23 illustrates a structural diagram of a sensing apparatus provided in an exemplary embodiment of the present application.
FIG. 24 illustrates a structural diagram of a sensing apparatus provided in an exemplary embodiment of the present application.
FIG. 25 illustrates a structural block diagram of a sensing device provided in an exemplary embodiment of the present application.
FIG. 26 illustrates a structural block diagram of a sensing device provided in an exemplary embodiment of the present application.

### DETAILED DESCRIPTION

To make the objectives, technical solutions, and advantages of the present application clearer, the embodiments of the present application will be described in further detail below with reference to the accompanying drawings. The exemplary embodiments will be described in detail herein, with examples thereof illustrated in the accompanying drawings. When the following description refers to the accompanying drawings, unless otherwise indicated, the same numbers in different drawings denote the same or similar elements. The implementations described in the following exemplary embodiments do not represent all implementations consistent with the present application. Instead, they are merely examples of apparatuses and methods consistent with some aspects of the present application as detailed in the appended claims.

The terms used in the present disclosure are for the purpose of describing particular embodiments only and are not intended to limit the present disclosure. As used in the present disclosure and the appended claims, the singular forms "a/an," "the," and "said" are intended to include the plural forms as well, unless the context clearly indicates otherwise. It should also be understood that the term "and/or" as used herein refers to and includes any and all possible combinations of one or more of the associated listed items.

It should be understood that although the terms first, second, third, etc., may be used in the present application to describe various information, such information should not be limited to these terms. These terms are only used to distinguish the same type of information from each other. For example, without departing from the scope of the present application, first information may also be referred to as second information, and similarly, second information may also be referred to as first information. Depending on the context, the word "if" as used herein may be interpreted as "when" or "upon" or "in response to".

It should be understood that in the various embodiments of the present application, the sequence numbers of the above processes do not imply a limitation on the order of execution; the execution order of each process should be determined by its function and inherent logic.

First, the communication technology involved in the embodiments of the present application is introduced. The following related technologies, serving as optional solutions, may be arbitrarily combined with the technical solutions of the embodiments of the present application, and all such combinations shall fall within the protection scope of the embodiments of the present application.

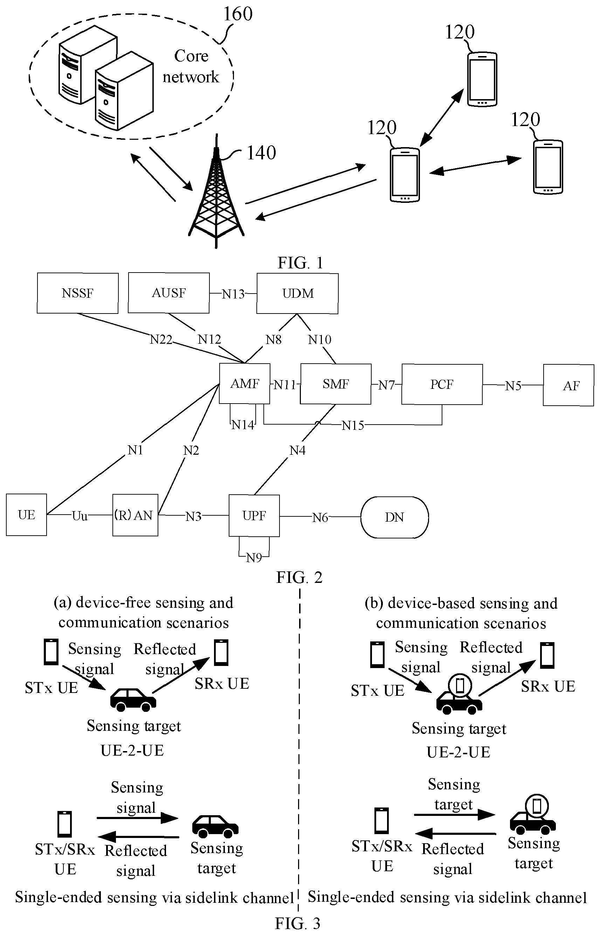

FIG. 1 illustrates a schematic diagram of a communication system 100 architecture provided in an exemplary embodiment of the present application. As illustrated in FIG. 1, the communication system 100 may include at least one of: a terminal device (User Equipment, UE) 120, an access network device 140, a core network (CN) 160, and a data network (not illustrated in the figure). The terminal device 120, the access network device 140, and the core network 160 may be logically divided into two parts: a user plane and a control plane. The control plane is responsible for the management of the mobile network, and the user plane is responsible for the transmission of service data.

The terminal device 120 serves as an entry point for mobile users to interact with the network. It provides basic calculation and storage capabilities, displays service windows to users, and accepts user operation inputs. The terminal device 120 establishes a signal connection and a data connection with the access network device 140 using a certain air interface technology, thereby transmitting control signals and service data to the mobile network. The terminal device 120 may also be referred to as user equipment, an access terminal, a user unit, a user station, a mobile station, a mobile terminal, a remote station, a remote terminal, a mobile device, a user terminal, a terminal, a wireless communication device, a user agent, or a user apparatus. The terminal device 120 may be deployed on land, on water, or in the air, including but not limited to: a handheld device, a wearable device, an in-vehicle device, and an internet of things device, such as: an electronic tag, a mobile phone, a tablet computer, an e-book reader, a laptop computer, a desktop computer, a television, a game console, a station (STA), a mobile internet device (MID), an augmented reality (AR) terminal, a virtual reality (VR) terminal, a mixed reality (MR) terminal, a wearable device, a controller, a wireless terminal in industrial control, a wireless terminal in self driving, a wireless terminal in remote medical, a wireless terminal in smart grid, a wireless terminals in transportation safety, a wireless terminal in smart city, a wireless terminal in smart home, a wireless terminal in remote medical surgery, a cellular phone, a cordless phone, a session initiation protocol (SIP) phone, a wireless local loop (WLL) station, a personal digital assistant (PDA), a set top box (STB), and a customer premise equipment (CPE), etc. The number of terminal devices 120 is typically multiple, and one or more terminal devices 120 may be distributed within the cell managed by each access network device 140. In the embodiments of the present application, "terminal device" and "UE" are often used interchangeably, but those skilled in the art can understand their meanings.

Multiple terminal devices 120 may communicate with each other via a direct communication interface, such as a PC5 interface. In some embodiments, communication among multiple terminal devices 120 is referred to as sidelink communication.

The access network is configured to implement access-related functions. It may provide network access functions for authorized users within the cell coverage area, and may use transmission tunnels of different qualities to transmit user data according to user levels and service requirements, etc. The access network may manage its own resources, utilize the resources reasonably, and provide access services to the terminal device 120 as needed, and forward control signals and user data between the terminal device 120 and the core network 160. The access network device 140 is a device deployed in the access network to provide wireless communication functions for the terminal device 120, and may include a radio access network (RAN) device and/or an AN device. The RAN device is mainly a wireless network device in a 3GPP network, and the AN device may be an access network device defined by non-3GPP. The name of the "access network device" may vary in systems using different radio access technologies. The access network device 120 includes but is not limited to: an evolved node B (eNB), a radio network controller (RNC), a node B (NB), a base station controller (BSC), a base transceiver station (BTS), a home base station (e.g., a home evolved node B, or a home node B (HNB)), a baseband unit (BBU), an access point (AP) in a wireless fidelity (Wi-Fi) system, a wireless relay node, a wireless backhaul node, a transmission point (TP) or a transmission and reception point (TRP), etc. It may also be a next generation node B (gNB) or a TRP or a TP in a 5th generation (5G) mobile communication system, or one or a group (including multiple antenna panels) of antenna panels of a base station in a 5G system, or a network node constituting a gNB or transmission point, such as a baseband unit (BBU) or a distributed unit (DU), etc., or a base station in a beyond fifth generation (B5G) mobile communication system, a 6th generation (6G) mobile communication system, etc., or a reader in a radio frequency identification (RFID) system. In some embodiments, the access network device may also be referred to as a network device.

The core network 160 is responsible for maintaining subscription data of the mobile network, managing network elements of the mobile network, and providing functions such as session management, mobility management, policy management, and security authentication for the terminal device 120. For example, when the terminal device 120 attaches, the core network 160 provides network access authentication for the terminal device 120; when the terminal device 120 has a service request, the core network 160 allocates network resources for the terminal device 120; when the terminal device 120 moves, the core network 160 updates network resources for the terminal device 120; when the terminal device 120 is idle, the core network 160 provides a fast recovery mechanism for the terminal device 120; when the terminal device 120 detaches, the core network 160 releases network resources for the terminal device 120; when the terminal device 120 has service data, the core network 160 provides data routing functions for the terminal device 120, such as forwarding uplink data to a data network (DN); or receiving, from the data network, downlink data transmitted to the terminal device 120, and forwarding it to the access network device 140, thereby transmitting the downlink data to the terminal device 120. The core network 160 may be deployed in a private network or a public network. Network elements deployed in the core network are referred to as core network elements. The core network element may also be regarded as a functional entity, and one or more core network elements may be deployed on one physical device.

The data network is used to provide business services for users. The data network may be a private network, such as a local area network; the data network may also be an external network not controlled by the operator, such as the Internet; and the data network may also be a dedicated network jointly deployed by operators, such as an IP multimedia core network subsystem (IMS). The terminal device 120 may access the data network through an established protocol data unit (PDU) session.

In some embodiments, there are two communication scenarios in the communication system 100: an uplink communication scenario and a downlink communication scenario. The uplink communication refers to transmitting signals in the direction from the terminal device 120, the access network device 140, the core network 160, to the data network; and the downlink communication refers to transmitting signals in the direction from the data network, the core network 160, the access network device 140, to the terminal device 120.

FIG. 2 is a detailed architecture determined on the basis of FIG. 1, the architecture includes a UE, a (R)AN, a core network element, and a DN. The architecture may be theoretically divided into two parts: a user plane and a control plane. The control plane is responsible for the management of the mobile network, and the user plane is responsible for the transmission of service data. In FIG. 2, an NG2 reference point is located between the (R)AN control plane and the core network control plane, an NG3 reference point is located between the (R)AN user plane and the core network user plane, and an NG6 reference point is located between the core network user plane and the data network.

The core network user plane includes the following core network element: a user plane function (UPF).

The core network control plane includes at least one of the following core network elements: a location management function (LMF), a sensing function (SF), an authentication server function (AUSF), an access and mobility management function (AMF), a session management function (SMF), a network slice selection function (NSSF), a network exposure function (NEF), a network repository function (NRF), an unified data management (UDM), a policy control function (PCF), or an application function (AF).

Here, the UPF is responsible for forwarding and receiving user data, as well as functions related to domain name queries. The AMF is mainly responsible for mobility management in the mobile network, such as user location update, user network registration, and user handover. The SMF is mainly responsible for session management in the mobile network, such as session establishment, modification, and release. The PCF mainly supports providing a unified policy framework to control network behavior, providing policy rules to control layer network functions, and is also responsible for obtaining user subscription information related to policy decisions. The AUSF is used to perform security authentication of the terminal. The NEF is mainly used to support the opening of capabilities and events. The NRF is used to provide storage and selection functions for network function entity information for other network elements. The UDM is used to store user data, such as subscription data and authentication/authorization data, etc. The AF interacts with the core network to provide application layer services, such as providing application layer data routing, providing access network capability opening functions, interacting with policy frameworks to provide policy control, and interacting with the IMS, etc. The LMF is responsible for location service of a UE, such as location calculation, location management, and positioning, etc.

The SF is used to provide sensing services for the UE and/or access network device to support the sensing function of the cellular network. Exemplarily, when an application transmits a sensing request for a sensing target to the core network, the core network selects an appropriate access network device or sensing node through the SF or AMF, and triggers the sensing-related wireless measurement to obtain a sensing result through the measured sensing information.

In some embodiments, the sensing function may be implemented by setting up the SF in the core network, or the sensing function may be implemented by the LMF in the core network without necessarily adding a new SF. That is, the sensing service involved in the embodiments of the present application may be implemented by the SF or by the LMF. That is to say, the embodiments of the present application support setting the LMF dedicated to positioning service and the SF dedicated to sensing service, and also support endowing the LMF with both positioning and sensing functions.

In the architecture illustrated in FIG. 2, an N1 interface is a reference point between a UE and an AMF; an N2 interface is a reference point between an RAN and the AMF, used for transmitting a non-access stratum (NAS) message, etc.; an N3 interface is a reference point between the RAN and a UPF, used for transmitting user plane data, etc.; an N4 interface is a reference point between an SMF and the UPF, used for transmitting information such as tunnel identification information of N3 connection, data caching indication information, and a downlink data notification message, etc; an N6 interface is a reference point between the UPF and a DN, used for transmitting user plane data, etc. An NG interface is an interface between the RAN and a CN.

It should be noted that the names of the aforementioned core network elements (e.g., SF, LMF, SMF, AF, UPF) are only examples and do not limit the functions of the network elements themselves. In the networks of related technologies and other future networks, the network elements may also have other names, which is not limited in the embodiments of the present application. For example, in B5G and 6G networks, some or all of the network elements may continue to use the terminology of 5G networks, or may adopt other names, etc. This is uniformly described here and will not be repeated below. In addition, it should be understood that in some embodiments of the present application, the names of the messages (or signaling) transmitted among the involved terminal devices, access network devices, and various core network elements are also only examples and do not constitute any limitation on the functions of the messages (or signaling) themselves; the various messages (or signaling) may also adopt other names.

### Definition of sensing:

Integrated sensing and communication (ISAC) technology, referred to as ISAC technology, enables communication and sensing to complement each other. The sensing herein generally refers to wireless signal sensing, that is, by analyzing the direct, reflected, and scattered signals of radio waves, obtaining sensing of the environment and/or target object information in the environment (e.g., attributes and states), and completing functions such as positioning, ranging, velocity measurement, imaging, detection, identification, and environmental reconstruction, thereby achieving sensing exploration of the physical world. The wireless signal sensing may be simply referred to as wireless sensing.

From the perspective of whether the sensing node emits electromagnetic waves, wireless sensing may be divided into passive sensing and active sensing. The passive sensing: a sensing node (e.g., network device or terminal device) performs sensing by obtaining electromagnetic waves (e.g., terahertz waves) emitted by a target object, or the sensing node reflects electromagnetic waves from sources other than the sensing node and the target object for sensing, such as passive imaging sensing technologies. The active sensing: a sensing transmitting node (e.g., network device or terminal device) transmits electromagnetic waves, which are reflected by the target object, and then the sensing receiving node receives the echoes for sensing, such as active radar sensing technologies that emit detection signals. The sensing receiving node and the sensing transmitting node are not necessarily the same, that is, multiple nodes of the sensing party may achieve active sensing through some form of joint processing.

From the perspective of sensing requirements, wireless sensing may be divided into Per-Area sensing and communication scenarios, which focus on the sensing area, and Per-Object sensing and communication scenarios, which focus on the sensing target. Sensing requirements are ubiquitous across thousands of industries. Scenarios that require efficient sensing of the real-time status of roads, vehicles, people in factories, roads, low-altitude areas, cities, and even larger spatiotemporal ranges may be referred to as Per-Area sensing and communication scenarios. Scenarios that use sensing and communication technology to continuously sense and track a sensed object to obtain dynamic monitoring of the object's state may be referred to as Per-Object sensing and communication scenarios.

From the perspective of whether the sensing target has signal receiving or transmitting capabilities, wireless sensing may be divided into device-based sensing and communication scenarios and device-free sensing and communication scenarios. For example, in flight path management, the sensing target is a drone, which has signal receiving or transmitting capabilities. In beam management of base stations and terminals, the sensing target is a terminal, which also has signal transmitting or receiving capabilities. Therefore, flight path management and beam management of base stations and terminals belong to device-based sensing and communication scenarios. As another example, in weather monitoring, the sensing target is rainwater, which does not have signal receiving or transmitting capabilities. In respiration monitoring, the sensing target is a person, who also does not have signal transmitting or receiving capabilities. Therefore, the weather monitoring and the respiration monitoring belong to device-free sensing and communication scenarios.

FIG. 3(a) illustrates two device-free sensing and communication scenarios, where the sensing target is a vehicle without signal transmission and reception capabilities. FIG. 3(b) illustrates two device-based sensing and communication scenarios, where the sensing target is a vehicle with signal receiving or transmitting capabilities. It can be considered that the sensing target includes a terminal device (User Equipment, UE), or the sensing target may also be regarded as a UE.

### Integrated sensing and communication technology:

Current cellular networks, such as the 5G system, are only used for communication. However, the wireless electromagnetic wave signals used by cellular networks are not only used for wireless data transmission and communication, but also have environmental sensing capabilities, such as user action or gesture recognition, respiratory monitoring, velocity measurement of the terminal device (User Equipment, UE), environmental imaging, and weather monitoring, etc. Therefore, in addition to using cellular networks for communication and data transmission, it may also be considered to use cellular networks for obtaining sensing information (as illustrated in Table 1) to achieve the integration of communication and sensing. This technology that integrates communication and sensing may be referred to as integrated sensing and communication (ISAC) technology, referred to as ISAC technology.

**Table 1: sensing information at different levels**

| | Sensing information at different levels | Content of sensing information |
|---|---|---|
| 1 | Received signal or original channel information | Complex results of received signal or channel response, amplitude/phase, I-component/Q-component and their related calculation results |
| 2 | Basic measurement quantity | Time delay, Doppler shift, angle, signal strength, and their multi-dimensional combination representation |
| 3 | Basic attributes or status of a sensing target | Distance, velocity, orientation, acceleration, etc. |
| 4 | Advanced attributes or status of a sensing target | Target presence, spatial location, trajectory, movement, expression, vital signs, quantity, imaging results, weather, air quality, shape, material, composition, etc. |

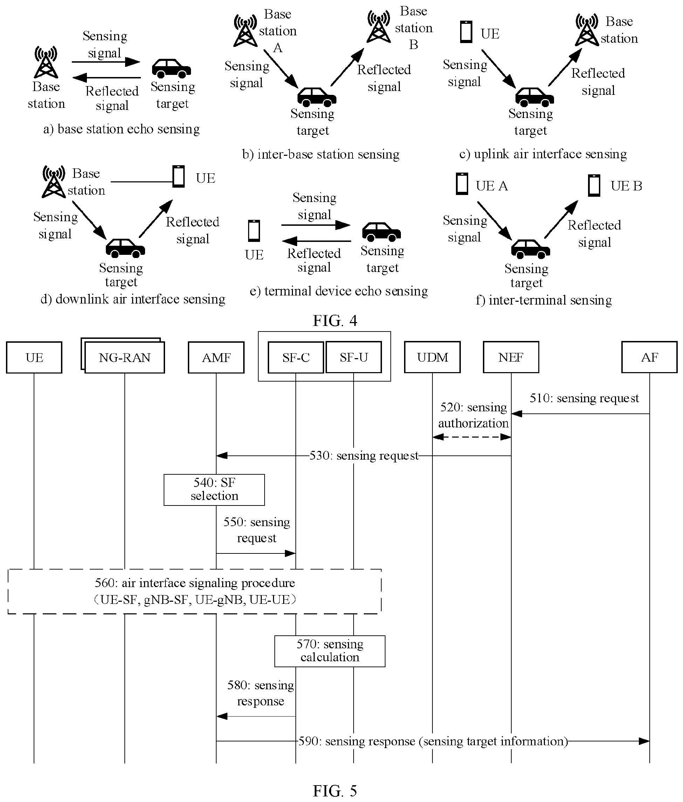

There are six main wireless sensing modes of integrated sensing and communication technology, as illustrated in FIG. 4:
1) base station echo sensing (gNB self-transmitting and self-receiving sensing): a base station transmits a sensing signal and receives a reflected signal;
2) inter-base station sensing (gNB-2-gNB sensing): base station A transmits a sensing signal, and base station B receives a reflected signal;
3) uplink air interface sensing (UE-2-gNB sensing): a UE transmits a sensing signal, and a base station receives a reflected signal;
4) downlink air interface sensing (gNB-2-UE sensing): a base station transmits a sensing signal, and a UE receives a reflected signal;
5) terminal device echo sensing (UE self-transmitting and self-receiving sensing): a UE transmits a sensing signal and receives a reflected signal; and
6) inter-terminal sensing (UE-2-UE sensing): UE A transmits a sensing signal, and UE B receives a reflected signal.

In the embodiments of the present application, a sensing signal refers to a signal used to obtain a sensing result, and may also be understood as a signal used to perform a sensing service. The sensing signal may be a signal dedicated to the sensing service, or may be a general-purpose signal. The sensing signal may be a data signal or a reference signal, such as a positioning reference signal (PRS), a demodulation reference signal (DMRS), a sounding reference signal (SRS), an enhanced-SRS (E-SRS), a carrier phase reference signal (CPRS), or a channel state information reference signal (CSI-RS), without listing all reference signals here. Therefore, the sensing signal may also be referred to as a sensing reference signal (Sensing RS). In the embodiments of the present application, the terms "sensing RS" and "sensing signal" are generally used interchangeably, but those skilled in the art can understand the meaning, and "sensing RS" may be replaced by "sensing signal".

In the embodiments of the present application, a sensing mode may also be referred to as a sensing method.

### Application scenarios of sensing:

In smart transportation scenarios, it is supported to achieve sensing of the road environment by means of base stations or inter-base station cooperation based on integrated sensing and communication, effectively enabling high-precision map construction and providing beyond-line-of-sight assistance for the safe operation of autonomous vehicles; it is supported to achieve all-round, all-weather, and uninterrupted detection of the movement trajectories and velocities of traveling vehicles by means of base stations or inter-base station cooperation based on integrated sensing and communication, and to upload the sensing information to a processing center, thereby comprehensively enhancing the intelligent perception capability of highway operation status and providing data support for road supervision; it is supported to achieve sensing of the railway track environment by means of base stations based on integrated sensing and communication, realizing all-weather foreign object intrusion detection around high-velocity railways.

In smart low-altitude scenarios, it is supported to perform all-round multi-angle sensing of the airspace by means of base stations or inter-base station cooperation based on integrated sensing and communication and to provide the sensing result to the drone, which may provide redundancy for obstacle avoidance warning and improve the success rate of drone obstacle avoidance; it is supported to perform full-airspace sensing by means of base stations or inter-base station cooperation based on integrated sensing and communication, to locate and track the drone intruding into the supervised area, and thereby to achieve drone intrusion monitoring for fixed areas.

In smart living scenarios, it supports to be based on working modes such as cooperation between the base station and the terminal device, self-transmitting and self-receiving of the terminal device, or cooperation among terminal devices, it is supported to perform respiratory monitoring, fitness monitoring, gesture/posture recognition, etc., by sensing changes in wireless channels; it is supported to measure signal link attenuation in communication links by means of base stations or inter-base station cooperation based on integrated sensing and communication technology, and then to analyze the relationship between signal link attenuation and weather indicators to derive corresponding weather indicators, thereby performing weather monitoring.

In smart network scenarios, it is supported to obtain information such as the density and location of idle terminal devices within a cell by means of base stations or inter-base station cooperation based on integrated sensing and communication technology, thereby assisting in base station power saving and optimization of base station resource scheduling within the cell.

In smart transportation scenarios, it is supported to achieve continuous tracking of vehicles and real-time dynamic monitoring of vehicle status by means of base stations or inter-base station cooperation based on integrated sensing and communication technology. For vehicles equipped with wireless communication capabilities, it is also supported to improve vehicle sensing accuracy by means of vehicle cooperative sensing.

In smart low-altitude scenarios, it is supported to locate and track the drone intruding into the supervised area by means of base stations or inter-base station cooperation based on integrated sensing and communication technology, and then to take actions to drive away the unauthorized drone. For the connected drone with the wireless communication capability, it is also supported to identify the flight status of the drone and obstacles along the flight route by means of drone cooperative sensing, thereby providing auxiliary flight services.

In smart living scenarios, by carrying terminal devices that have communication capabilities, and based on working modes such as cooperation between the base station and terminal device, self-transmitting and self-receiving of the terminal device, or cooperation among terminal devices, it is possible to perform respiratory monitoring, fitness monitoring, gesture/posture recognition, etc., for a specific human body, thereby achieving accurate real-time dynamic monitoring.

In smart network scenarios, it is supported to assist, based on integrated sensing and communication technology, in improving beam management and channel estimation accuracy, enhancing the timeliness of beam tracking for terminal devices, improving channel estimation accuracy, and reducing feedback overhead.

### Positioning services:

Generally, an initiating unit of a positioning service is an NAS layer of the UE or a positioning proxy server. The UE, access network device, and LMF may assume different roles. Positioning services may be divided into two types: one in which the UE directly performs position calculation, and one in which the LMF performs position calculation.

If the positioning server indicates the UE to perform position calculation, the UE completes the position calculation based on a positioning measurement result transmitted by the network or obtained by UE itself, and transmits the calculated position information to the LMF. After relevant quality of service (QoS) verification by core network elements, the AMF finally feeds back the position information to the initiating unit of the positioning service. This type of positioning where the UE performs position calculation may be referred to as UE-based positioning.

If the positioning server indicates the LMF to perform position calculation, the LMF aggregates the measurement results of positioning reference signals obtained from the UE and TRP via the LTE position protocol (LPP) and NR position protocol a (NRPPa), respectively, and performs position calculation. Finally, the AMF forwards the position information back to the initiating unit of the positioning service. This type of positioning where the LMF performs position calculation may be referred to as LMF-based positioning.

LMF-based positioning may be divided into two types: UE-assisted LMF-based positioning and NG-RAN-node-assisted LMF-based positioning.

Here, UE-assisted LMF-based positioning refers to the UE reporting measurement results to the LMF, and the LMF calculating the position of the target UE based on the collected measurement results. NG-RAN-node-assisted LMF-based positioning refers to the access network node reporting the measurement result of TRP to the LMF, and the LMF calculating the position of the target UE based on the collected measurement results.

In brief, for LMF-based positioning, the UE or access network device performs measurement and reports the measurement quantity to the LMF, and the LMF performs position calculation. For UE-based positioning, the UE itself performs measurement and position calculation, and reports the final position estimate to the LMF. The difference between the two lies in the node that performs position calculation and the information transmitted over the air interface.

Compared with positioning, in some sensing scenarios, the calculation of the sensing result may require the substantial calculating resource, especially when the sensing computation employs artificial intelligence (AI)/machine learning (ML) methods, which will cause more severe power consumption on the terminal side. In addition, as illustrated in Table 1, the hierarchy of sensing information is very rich, and the data volume of sensing information may be much larger than that of positioning measurement quantities. When the UE transmits such sensing information to the network over the air interface, it will cause substantial air interface resource overhead.

From the perspective of the terminal side, power saving is an issue that needs attention. From the perspective of the access network device, air interface resource overhead is an issue that needs attention. In terms of terminal power saving and air interface resource overhead, sensing services face more severe issues than positioning services. Therefore, it is necessary to design a reasonable sensing method to achieve a balance between terminal side power overhead and air interface resource overhead.

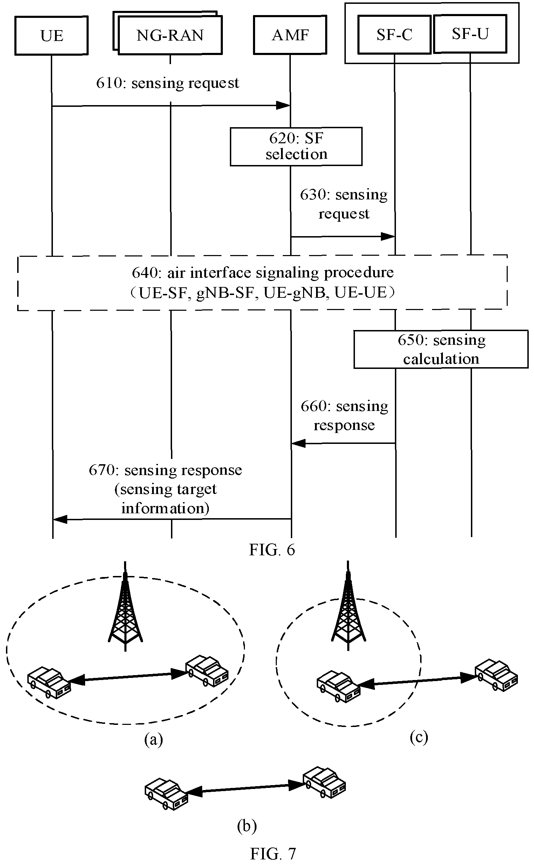

FIGS. 5 and 6 respectively illustrate a schematic flowchart of a sensing method provided in the exemplary embodiments of the present application. The sensing method may be applied to the communication systems illustrated in FIGS. 1 and 2. A node that triggers a sensing procedure or a node that transmits a sensing request may be referred to as a sensing client. The sensing client may be a core network element such as an AF (as illustrated in FIG. 2), an access network device, or a UE. The UE serving as a sensing client may be referred to as a sensing client UE.

FIG. 5 illustrates a schematic flowchart of a sensing method triggered by an AF.

In step 510, the AF transmits a sensing request to an NEF, indicating that the current sensing procedure is triggered by the AF. The sensing request belongs to a mobile terminated-sensing request (MT-SR). The sensing request may include information related to the sensing service, such as the sensing service type and the service requirement.

Step 520 is an optional step, where sensing authorization is performed between the NEF and an UDM.

In step 530, the NEF transmits the sensing request to the AMF.

In step 540, the AMF performs SF selection. Certainly, if the LMF has sensing capabilities, step 540 may be implemented as LMF selection. In the embodiments of the present application, the SF being responsible for the sensing service is used as an illustrative example.

In step 550, the AMF transmits the sensing request to the selected SF. Optionally, the SF is divided into a control plane (SF-C) and a user plane (SF-U).

In step 560, air interface signaling interaction related to sensing is performed. It can be understood that which specific nodes participate in this step depends on the sensing mode. For details, please refer to Table 2 below.

In step 570, the SF performs sensing calculation.

In step 580, the SF feeds back to the AMF a sensing response which includes information of a sensing target.

In step 590, the AMF feeds back to the NEF/AF a sensing response which includes information of the sensing target.

FIG. 6 illustrates a schematic flowchart of a sensing method triggered by a UE.

In step 610, the UE transmits a sensing request to an AMF, indicating that the current sensing procedure is triggered by the UE. The sensing request belongs to a mobile originated-sensing request (MO-SR). The sensing request may include information related to the sensing service, such as the sensing service type and the service requirement.

In step 620, the AMF performs SF selection. Certainly, if an LMF has sensing capabilities, step 620 may be implemented as LMF selection. In the embodiments of the present application, the SF being responsible for the sensing service is used as an illustrative example.

In step 630, the AMF transmits a sensing request to the selected SF. Optionally, the SF is divided into a control plane (SF-C) and a user plane (SF-U).

In step 640, air interface signaling interaction related to sensing is performed. It can be understood that which specific nodes participate in this step depends on the sensing mode. For details, please refer to Table 2 below.

In step 650, the SF performs sensing calculation.

In step 660, the SF feeds back to the AMF a sensing response which includes information of a sensing target.

In step 670, the AMF feeds back to the UE the sensing response which includes information of the sensing target.

In addition to the MT-SR and the MO-SR, the sensing request may also be triggered by a network element within the network, which is referred to as a network induced-sensing request (NI-SR). For the main procedure, please refer to FIGS. 5 and 6, which will not be repeated here.

The air interface signaling interaction in the aforementioned steps 560 and 640 may be divided into four types of signaling interaction according to the different interacting nodes: signaling interaction between the SF and the access network device (in Table 2, the access network device is exemplified as gNB) (abbreviated as SF-gNB), signaling interaction between the SF and the UE (abbreviated as SF-UE), signaling interaction between the access network device and the UE (abbreviated as gNB-UE), and signaling interaction between UE and UE (abbreviated as UE-UE). Referring to the six sensing modes illustrated in FIG. 4, Table 2 illustrates the types of signaling interaction that may be involved in different sensing modes, where "√" indicates the type of signaling interaction that may be involved in the sensing mode, and "×" indicates the type of signaling interaction that may not be involved in the the sensing mode.

**Table 2: types of signaling interactions involved in different sensing modes**

| | gNB Sensing | | UE-gNB Sensing | | UE Sensing | |
|---|---|---|---|---|---|---|
| | gNB self-transmitting and self-receiving | gNB-2-gNB | UE-2-gNB | gNB-2-UE | UE self-transmittin g and self-receiving | UE-2-UE |
| SF-gNB | √ | √ | √ | √ | √ | √ |
| SF-UE | × | × | √ | √ | √ | √ |
| gNB-UE | × | × | √ | √ | √ | √ |
| UE-UE | × | × | × | × | √ | √ |

Next, taking UE sensing modes (i.e., UE-2-UE sensing, UE self-transmitting and self-receiving sensing) as examples, the interaction process of air interface signaling is described in detail. The UE sensing mode needs to consider coverage scenarios of the UE. As illustrated in FIG. 7(a), in an in-coverage (IC) scenario, the UE is within the network coverage area or in a state of having a connection with a network device. As illustrated in FIG. 7(b), in an out-of-coverage (OOC) scenario, the UE is outside the network coverage area or in a state of having no connection with a network device. As illustrated in FIG. 7(c), in a partial coverage (PC) scenario, some UEs are within the network coverage area, and some UEs are outside the network coverage area.

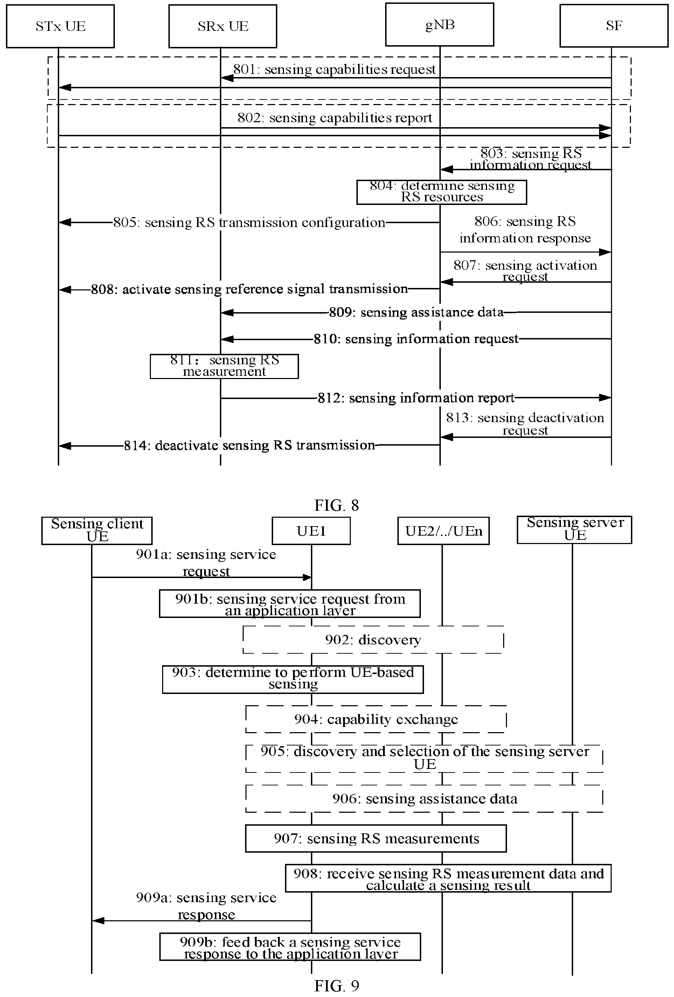

For the IC scenario, regardless of whether it is UE-2-UE sensing or UE self-transmitting and self-receiving sensing, a core network element may participate in the sensing procedure as a control node. Taking an SF being the control node as an example, a schematic flowchart of signaling interaction in a sensing method is illustrated in FIG. 8.

In step 801, the SF transmits a sensing capabilities request (e.g., Sensing Capabilities Request) to the UE. The UE includes a sensing transmitting UE (STx UE) and/or a sensing receiving UE (SRx UE). In the embodiments of the present application, the STx UE is responsible for transmitting a sensing signal in a UE sensing mode, and the SRx UE is responsible for receiving and measuring the sensing signal, and obtaining a sensing measurement quantity in the UE sensing mode.

In step 802, the UE feeds back a sensing capabilities report (e.g., Sensing Capabilities Report) to the SF. The UE includes the STx UE and/or the SRx UE.

In step 803, the SF transmits a sensing reference signal information request (e.g., Sensing RS Info Request) to a gNB.

In step 804, the gNB determines sensing reference signal resources (gNB determines Sensing RS Resources), such as time domain resources, frequency domain resources, and spatial domain resources, etc.

In step 805, the gNB transmits a sensing reference signal transmission configuration (e.g., Sensing RS Tx Configuration) to the STx UE.

In step 806, the gNB transmits a sensing reference signal information response (e.g., Sensing RS Info Response) to the SF.

In step 807, the SF transmits a sensing activation request (e.g., Sensing Activation Request) to the gNB.

In step 808, the gNB transmits a message used for activating sensing reference signal transmission (Activate Sensing RS Transmission) to the STx UE.

In step 809, the SF transmits sensing assistance data (Provide Sensing Assistance Data) to the SRx UE.

In step 810, the SF transmits a sensing information request (e.g., Sensing Information Request) to the SRx UE.

In step 811, the SRx UE performs a sensing reference signal measurement (e.g., Sensing RS Measurements).

In step 812, the SRx UE feeds back a sensing information report (e.g., Sensing Information Report) to the SF.

In step 813, the SF transmits a sensing deactivation request (e.g., Sensing Deactivation Request) to the gNB.

In step 814, the gNB transmits a message used for deactivating sensing reference signal transmission (Deactivate Sensing RS Transmission) to the STx UE.

For the OOC scenario, since the UE cannot obtain network coverage, the core network element cannot participate in the sensing procedure, and the signaling interaction procedure illustrated in FIG. 8 cannot be adopted. In this case, some terminal devices are required to undertake at least part of the tasks of the core network element, that is, a sensing server UE/sensing management UE is introduced to undertake some SF functions, such as sensing measurement quantity processing and other functions. The sensing server UE/sensing management UE may be exactly the STx UE, or exactly the SRx UE, or may be a logical node independent of the STx UE and the SRx UE. In particular, for the UE self-transmitting and self-receiving sensing mode, the STx UE and the SRx UE are the same terminal device. Taking the sensing server UE assuming the SF function as an example, a schematic flowchart of signaling interaction in a sensing method is illustrated in FIG. 9.

In step 901a, a sensing client UE transmits a sensing service request (e.g., Sensing Service Request) to UE 1. Exemplarily, communication among UEs may be implemented via a direct communication interface (e.g., PC5 interface).

In step 901b, UE 1 receives a sensing service request from an application layer (Sensing Service Request from Application Layer).

Step 902 is an optional step, representing a discovery procedure (Discovery) among UE 1 and other UEs (e.g., UE 2 to UE n).

In step 903, UE 1 determines to perform UE-based sensing (Determine UE-only Operation).

Step 904 is an optional step, representing a capability exchange (Capability Exchange) among UE 1 and other UEs.

Step 905 is an optional step, representing a discovery and selection procedure of a sensing server UE (Sensing Server UE Discovery & Selection).

Step 906 is an optional step, representing a sensing assistance data transfer procedure (Sensing Assistance Data Transfer) among the sensing server UE, UE 1, and other UEs.

In step 907, sensing RS measurements (Sensing RS Measurement) among UE 1 and other UEs.

In step 908, the sensing server UE receives sensing RS measurement data and calculates a sensing result (Sensing RS Measurement Data Transfer & Result Calculation).

In step 909a, UE 1 feeds back a sensing service response (Sensing Service Response) to the sensing client UE. Exemplarily, the sensing service response is fed back via the PC5 interface.

In step 909b, UE 1 feeds back a sensing service response to the application layer (Sensing Service Response to Application Layer).

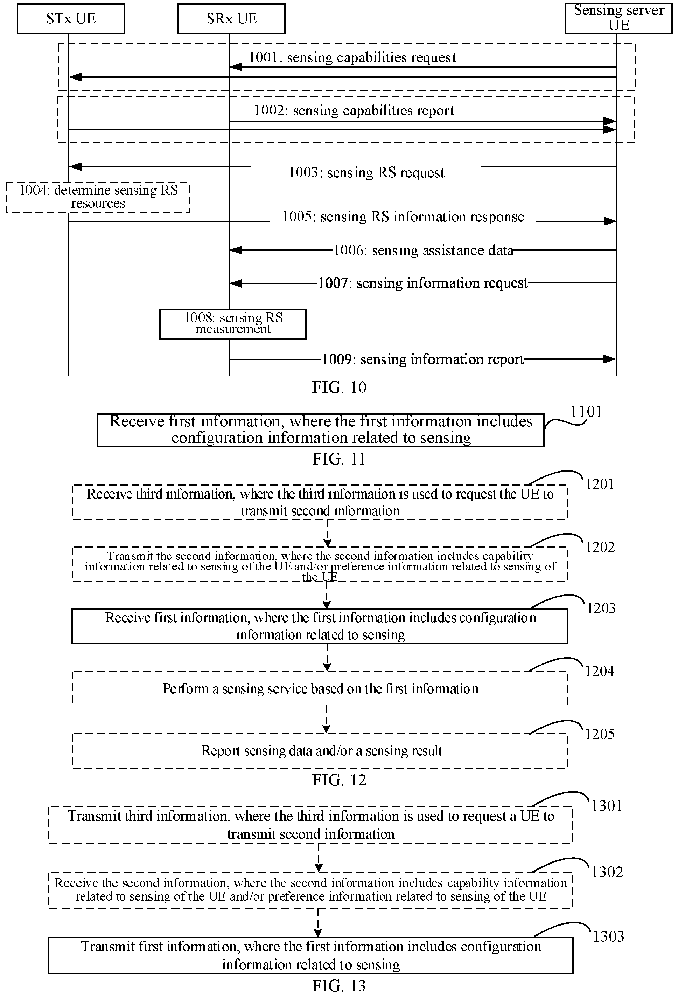

The aforementioned steps 904 to 908 belong to the interaction procedure of air interface sensing signaling. For further details, please refer to the schematic flowchart illustrated in FIG. 10.

In step 1001, a sensing server UE transmits a sensing capabilities request (e.g., Sensing Capabilities Request) to a UE. The UE includes an STx UE and/or an SRx UE.

In step 1002, the UE feeds back the sensing capabilities report (e.g., Sensing Capabilities Report) to the sensing server UE. The UE includes the STx UE and/or the SRx UE.

In step 1003, the sensing server UE transmits a sensing reference signal request (e.g., Sensing RS Request) to the STx UE.

Step 1004 is an optional step, representing that the STx UE determines sensing reference signal resources (STx UE determines Sensing RS Resources), such as time domain resources, frequency domain resources, and spatial domain resources, etc.

In step 1005, the STx UE transmits a sensing reference signal response (e.g., Sensing RS Response) to the sensing server UE.

In step 1006, the sensing server UE transmits sensing assistance data (Provide Sensing Assistance Data) to the SRx UE.

In step 1007, the sensing server UE transmits a sensing information request (e.g., Sensing Information Request) to the SRx UE.

In step 1008, the SRx UE performs sensing reference signal measurements (e.g., Sensing RS Measurements).

In step 1009, the SRx UE feeds back a sensing information report (e.g., Sensing Information Report) to the sensing server UE.

Furthermore, in order to achieve the effects of power saving and air interface resource overhead saving, the present application proposes a sensing method as illustrated in FIG. 11. The method is applicable to the sensing procedures illustrated in FIGS. 5, 6, 8, 9, and 10, and is also applicable to other different sensing procedures. The sensing method illustrated in FIG. 11 is performed by a UE, and the UE may be implemented as the UE illustrated in FIG. 1 or FIG. 2. The method includes at least the following step.

**In step 1101,** receiving first information, where the first information includes configuration information related to sensing.

The configuration information related to sensing, which may also be referred to as sensing configuration information, and may be understood as configuration information used for performing a sensing service, or may be understood as configuration information related to a sensing service.

In some embodiments, the configuration information related to sensing includes at least one of: sensing measurement configuration information, sensing assistance information used for calculation, or configuration information used for switching a sensing mode.

In some embodiments, the UE performs the sensing service based on the received first information.

In some embodiments, sensing may be equivalent to or replaced by at least one of: positioning, ranging, velocity measurement, angle measurement, target imaging, target detection, target tracking, or target recognition.

In some embodiments, a sensing result includes at least one of: a detection result of a target, a detection result of an environment, a recognition result of a target, a recognition result of an environment, a measurement result of a target, or a measurement result of an environment. Here, the measurement includes at least one operation such as measuring distance, measuring delay, measuring angle, measuring movement velocity, measuring phase, etc.

The UE involved in the embodiments of the present application is a UE participating in a sensing service. For example, it may be the STx UE described above, it may also be the SRx UE described above, and it may further be a sensing server UE, a sensing management UE, a sensing client UE, etc.

In summary, in the method provided in the embodiments of the present application, since configuration information related to sensing is configured for the UE, the UE is enabled to perform a sensing service based on the expectation and indication of a network side, thereby avoiding the UE from performing meaningless, repetitive, and redundant operations that waste power consumption, and avoiding the UE from exchanging meaningless, repetitive, and redundant signaling or data with the network side that waste air interface resources, thus helping to achieve the effects of power saving and air interface resource saving.

With reference to the positioning service described above, the sensing method provided in the embodiments of the present application may also be divided into two sensing modes: a first sensing mode and a second sensing mode. The first sensing mode is a UE-based sensing mode, where the UE calculates and obtains the sensing result. The second sensing mode is a core network element-based sensing mode, where the core network element calculates and obtains the sensing result. The core network element may be an SF or an LMF.

With reference to the sensing procedures illustrated in FIGS. 8, 9, and 10, it can be understood that under different sensing modes, the execution steps of the UE and the exchanged air interface signaling will be different. Then, how should the UE determine whether to currently use the first sensing mode or the second sensing mode? That is to say, how should the UE determine whether the current sensing result is to be calculated by itself or by a core network element? Based on the sensing method illustrated in FIG. 11, the embodiments of the present application further propose the following three sensing methods that facilitate determining the sensing mode.

Method 1: the core network element indicates the sensing mode based on capability information of the UE and/or capability information of the access network device.

Method 2: the core network element indicates the sensing mode based on request information of the UE and/or request information of the access network device.

Method 3: the UE autonomously determines the sensing mode.

It should be noted that Method 1, Method 2, and Method 3 may be used independently or in any combination. Exemplarily, Method 1 and Method 2 are used in combination. For example, Method 1 is performed at the beginning of the sensing procedure, and Method 2 is performed during the sensing process; as another example, Method 2 is performed first, followed by Method 1, etc. All possible combination scenarios are not exhaustively listed here. Exemplarily, Method 1 and Method 3 are used in combination. For example, Method 1 is performed at the beginning of the sensing procedure, and Method 3 is performed during the sensing process; as another example, Method 3 is performed first, followed by Method 1, etc. Exemplarily, Method 2 and Method 3 are used in combination. Exemplarily, Method 1, Method 2, and Method 3 are used in combination.

First, Method 1 is introduced. The core network element indicates the sensing mode based on the capability information of the UE. FIG. 12 illustrates a schematic flowchart of a sensing method provided in an exemplary embodiment of the present application. The method is performed by a UE and includes at least one of the following steps.

**In step 1201,** receiving third information, where the third information is used to request the UE to transmit second information.

In some embodiments, the third information includes sensing capabilities request information (Sensing Capabilities Request).

In some embodiments, the third information indicates the UE to report one or more of: capability information related to processing of sensing information, capability information related to calculation of sensing information, preference information related to processing of sensing information, preference information related to calculation of sensing information, a UE power saving class, or a UE power saving mode.

In some embodiments, the third information implicitly indicates the UE to transmit the second information. Exemplarily, if the UE receives the third information, it means that the UE is indicated to transmit the second information; if the UE does not receive the third information, it means that the UE is not indicated to transmit the second information. Alternatively, the third information explicitly indicates the UE to transmit the second information.

In some embodiments, the capability information related to the processing and calculation of sensing information may also be understood as processing manners and computation manners of sensing information supported by the UE. The preference information related to the processing and calculation of sensing information may also be understood as processing manners and calculation manners of sensing information expected by the UE, or as the processing manners and calculation manners of sensing information suggested by the UE.

In some embodiments, the sensing capabilities request information further includes information related to the sensing service, such as a sensing service type and a service requirement.

In some embodiments, the sensing service type includes at least one of: indication detection, weather monitoring, unmanned aerial vehicle (UAV) identification, UAV obstacle avoidance, high-definition map construction, road supervision, flight path management, respiration monitoring, gesture/pose recognition, motion monitoring, movement trajectory tracking, material detection, or item defect detection.

The UE involved in the embodiments of the present application is a UE participating in a sensing service. For example, it may be the STx UE described above, it may also be the SRx UE described above, and it may further be a sensing server UE, a sensing management UE, a sensing client UE, etc.

**In step 1202,** transmitting the second information, where the second information includes capability information related to sensing of the UE and/or preference information related to sensing of the UE.

In some embodiments, the second information includes a sensing capabilities report.

In some embodiments, the second information includes at least one of: whether the UE supports a first sensing mode; whether the UE supports a second sensing mode; a type of sensing data supported by the UE for reporting; sensing data supported by the UE for reporting; a sensing performance indicator supported by the UE; a sensing mode preferred by the UE; a type of sensing data preferred by the UE; sensing data preferred by the UE; a sensing performance indicator preferred by the UE; or a current power saving class/power saving mode of the UE.

In some embodiments, the sensing data types include at least one of: raw sensing data, preliminary sensing data, intermediate sensing data, or a sensing result. In practice, different types of sensing data imply the extent to which the UE may perform the processing and calculation of sensing. Exemplarily, if the UE supports reporting the sensing result, it means that the UE supports calculating and obtaining the final sensing result. Exemplarily, if the UE prefers to report the raw sensing data, it means that the UE does not expect to perform the processing and calculation of sensing. Optionally, different types of sensing data may be combined with different levels of sensing information as illustrated in Table 1, where lower-level sensing information corresponds to the raw sensing data and the preliminary sensing data, medium-level sensing information corresponds to the intermediate sensing data, and high-level sensing information corresponds to the sensing result.

In some embodiments, the sensing data includes at least one of: velocity, delay, Doppler shift, an angle, signal strength, distance, orientation, acceleration, complex results of received signal or channel response, amplitude, phase, or I-component/Q-component and their related calculation results.

In some embodiments, the sensing result includes at least one of: target presence, a spatial location, a trajectory, a movement, an expression, vital signs, a quantity, an imaging result, weather, air quality, a shape, a material, or a composition.

In some embodiments, the sensing performance indicator includes at least one of: sensing service delay, refresh rate, or sensing accuracy. The sensing performance indicator may also be understood as a key performance indicator (KPI) corresponding to the sensing information processed by the UE.

In some embodiments, a communication protocol specifies multiple power saving classes or power saving modes, and the UE selects, according to the specifications of the communication protocol, a power saving class or power saving mode that matches the current power saving requirement.

In some embodiments, the network side configures multiple power saving classes or power saving modes, and the UE selects, according to the received configuration, a power saving class or power saving mode that matches the current power saving requirement.

In some embodiments, the network side indicates or suggests a current power saving class or power saving mode of the UE. Exemplarily, the third information carries indication information of the power saving class or power saving mode.

**In step 1203**, receiving first information, where the first information includes configuration information related to sensing.

In some embodiments, the first information includes sensing measurement configuration information and/or sensing assistance information used for calculation.

In some embodiments, the sensing measurement configuration information includes at least one of: sensing reference signal reception configuration (Sensing RS Rx Configuration), sensing measurement quantity, measurement configuration, reporting configuration, or sensing QoS information.

In some embodiments, the sensing assistance information used for calculation refers to assistance information used to calculate the preliminary sensing data, the intermediate sensing data, or the sensing result from the raw sensing data. Exemplarily, the sensing assistance information used for calculation includes location information of the sensing transmitting UE, angle information of the sensing transmitting UE, velocity information of the sensing transmitting UE, etc., which are specifically related to the parameters required for calculation. Exemplarily, the sensing assistance information used for calculation may also be referred to as assistance data for UE-based sensing.

In some embodiments, the first information is used to indicate the UE to adopt the first sensing mode or the second sensing mode. Optionally, the first information implicitly indicates which sensing mode the UE adopt. For example, if the first information carries configuration information of the first sensing mode, it means that the UE is indicated to adopt the first sensing mode; if the first information carries configuration information of the second sensing mode, it means that the UE is indicated to adopt the second sensing mode. Optionally, the first information explicitly indicates which sensing mode the UE adopts.

In some embodiments, the sensing QoS information includes at least one of: location accuracy, velocity accuracy, sensing resolution, maximum sensing service delay, refresh rate, confidence level, missed detection rate, or false alarm rate.

**In step 1204**, performing a sensing service based on the first information.

In some embodiments, the UE performs the sensing service using the sensing mode indicated by the first information. If the UE adopts the first sensing mode, it means that the UE calculates and obtains the sensing result. If the UE adopts the second sensing mode, it means that the UE does not need to calculate the sensing result, and needs to report the sensing data.

In some embodiments, according to the sensing measurement configuration information included in the first information, the UE measures a sensing measurement quantity and/or reports measurement data.

In some embodiments, the UE calculates the measurement data according to the sensing assistance information used for calculation included in the first information, to obtain one or more of the preliminary sensing data, the intermediate sensing data, or the sensing result.

**In step 1205**, reporting sensing data and/or a sensing result.

In some embodiments, the sensing data and/or the sensing result are carried in a sensing information report.

In some embodiments, the sensing data may be measurement data of a sensing measurement quantity, or may be sensing information as illustrated in Table 1.

It should be noted that the aforementioned steps 1201, 1202, 1204, and 1205 are optional steps. The execution order of different steps may be adjusted according to practical situations. Different steps may be combined, exemplarily, steps 1201 and 1203 may be implemented as one step, and exemplarily, steps 1204 and 1205 may be implemented as one step. Different steps may be divided, exemplarily, step 1203 may be implemented as two steps, where the first information is transmitted in two parts. The first information is implemented as sensing assistance data (including sensing reference signal reception configuration and/or sensing assistance information used for calculation) and a sensing information request (including sensing measurement quantity, measurement configuration, reporting configuration, and sensing QoS information), and the UE receives the sensing assistance data and the sensing information request respectively.

In summary, in the method provided in the embodiments of the present application, by configuring the UE with configuration information related to sensing, the UE is enabled to perform a sensing service based on expectation and indication of a network side, which helps to achieve the effects of power saving and air interface resource saving. Furthermore, the UE is supported to report its own capability information and preference information to assist the network side in determining which sensing mode to adopt, thereby accurately and targetedly transmitting configuration information corresponding to the sensing mode, which helps to improve sensing efficiency and accuracy, and reduce power consumption waste and air interface resource waste.

FIG. 13 illustrates a schematic flowchart of a sensing method provided in an exemplary embodiment of the present application. The method is performed by a core network element, and the method includes at least one of the following steps.

**In step 1301**, transmitting third information, where the third information is used to request a UE to transmit second information.

For relevant details of step 1301, please refer to step 1201, which will not be repeated here.

**In step 1302**, receiving the second information, where the second information includes capability information related to sensing of the UE and/or preference information related to sensing of the UE.

For relevant details of step 1302, please refer to step 1202, which will not be repeated here.

**In step 1303**, transmitting first information, where the first information includes configuration information related to sensing.

For relevant details of step 1303, please refer to step 1203, which will not be repeated here.

It should be noted that the aforementioned steps 1301 and 1302 are optional steps. The execution order of different steps may be adjusted according to practical situations. Different steps may be combined, exemplarily, steps 1301 and 1303 may be implemented as one step. Different steps may be divided, exemplarily, step 1303 may be implemented as two steps, where the first information is transmitted in two parts. The first information is implemented as sensing assistance data (including sensing reference signal reception configuration and/or sensing assistance information used for calculation) and a sensing information request (including sensing measurement quantity, measurement configuration, reporting configuration, and sensing QoS information), and the UE receives the sensing assistance data and the sensing information request respectively.

The core network element involved in the embodiments of the present application may be the SF described above, or may be the LMF.

In summary, in the method provided by the embodiments of the present application, by configuring the UE with configuration information related to sensing, the UE is enabled to perform a sensing service based on the expectation and indication of the core network element, which helps to achieve the effects of power saving and air interface resource saving. Furthermore, the UE is supported to report its own capability information and preference information to assist the core network element in determining which sensing mode to adopt, thereby accurately and targetedly transmitting configuration information corresponding to the sensing mode, which helps to improve sensing efficiency and accuracy, and reduce power consumption waste and air interface resource waste.

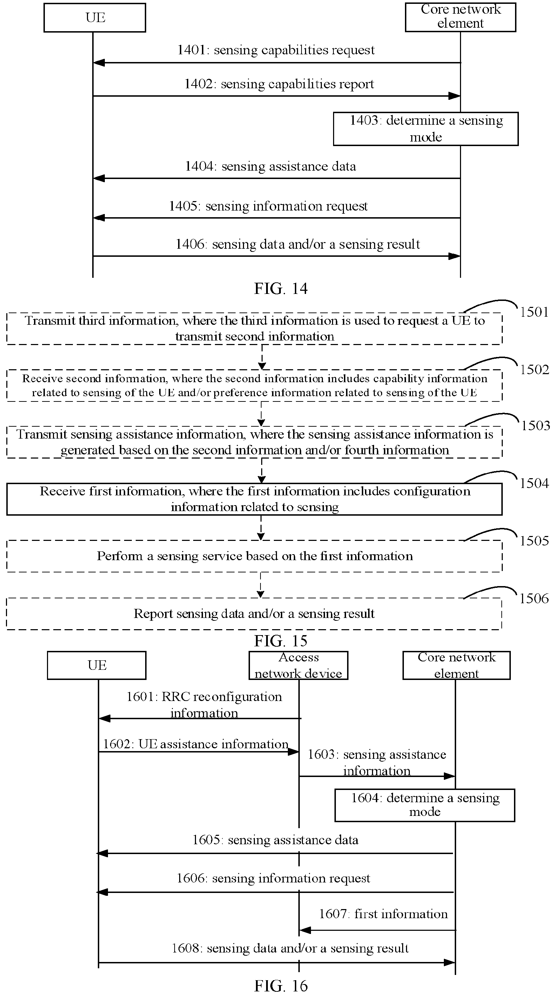

FIG. 14 illustrates a schematic flowchart of a sensing method provided in an exemplary embodiment of the present application. The method is performed by a UE and a core network element, and the method includes at least one of the following steps.

**In step 1401**, the core network element transmits a sensing capabilities request to the UE.

The sensing capabilities request belongs to third information. For specific details, please refer to step 1201, which will not be repeated here.

**In step 1402**, the UE transmits a sensing capabilities report to the core network element.

The sensing capabilities report belongs to second information. For specific details, please refer to step 1202, which will not be repeated here.

**In step 1403**, the core network element determines a sensing mode (Determines UE/SF-based sensing method).

That is, the core network element determines whether the UE adopts a first sensing mode or a second sensing mode. Optionally, the core network element determines the sensing mode to be adopted by the UE based on the received sensing capabilities report.

**In step 1404**, the core network element transmits sensing assistance data (Provide Sensing Assistance Data) to the UE.

The sensing assistance data belongs to first information. For specific details, please refer to step 1203, which will not be repeated here.

Exemplarily, the sensing assistance data includes a sensing reference signal reception configuration (Sensing RS Rx Configuration) and/or sensing assistance information used for calculation (Assistance Data for UE-Based Sensing).

In some embodiments, the sensing assistance information used for calculation is related to the first sensing mode, representing the sensing assistance information used for calculation used by the UE in the first sensing mode.

**In step 1405**, the core network element transmits a sensing information request to the UE.

The sensing information request belongs to the first information. For specific details, please refer to step 1203, which will not be repeated here.

Exemplarily, the sensing information request includes at least one of: a sensing measurement quantity (Sensing Measurement Quantities), a measurement configuration (Measurement Config), a reporting configuration (Reporting Config), sensing QoS information (Sensing QoS).

In some embodiments, the information carried in the sensing information request is related to the first sensing mode or the second sensing mode, representing the measurement and reporting configuration used by the UE in the first sensing mode or the second sensing mode.

In some embodiments, the signaling interaction involved in steps 1401 to 1405 occurs at the sensing protocol layer.

**In step 1406**, the UE reports sensing data and/or a sensing result.

For relevant details, please refer to steps 1204 and 1205, which will not be repeated here.

In summary, in the method provided in the embodiments of the present application, by configuring the UE with configuration information related to sensing, the UE is enabled to perform a sensing service based on the expectation and indication of the core network element, which helps to achieve the effects of power saving and air interface resource saving. Furthermore, the UE is supported to report its own capability information and preference information to assist the core network element in determining which sensing mode to adopt, thereby accurately and targetedly transmitting configuration information corresponding to the sensing mode, which helps to improve sensing efficiency and accuracy, and reduce power consumption waste and air interface resource waste.

Furthermore, in addition to the UE reporting capability information, a solution where an access network device reports capability information may also be considered. The following introduces Method 1: the core network element indicates a sensing mode based on capability information of the UE and/or capability information of the access network device.

FIG. 15 illustrates a schematic flowchart of a sensing method provided in an exemplary embodiment of the present application. The method is performed by an access network device, and the method includes at least one of the following steps.

**In step 1501**, transmitting third information, where the third information is used to request a UE to transmit second information.

In some embodiments, the third information includes radio resource control (RRC) reconfiguration information (RRC Reconfiguration).

For relevant details of the third information, please refer to step 1201, which will not be repeated here.

**In step 1502**, receiving second information, where the second information includes capability information related to sensing of the UE and/or preference information related to sensing of the UE.

In some embodiments, the second information includes terminal device assistance information (UE Assistance Info).

For relevant details of the second information, please refer to step 1202, which will not be repeated here.

**In step 1503**, transmitting sensing assistance information, where the sensing assistance information is generated based on the second information and/or fourth information.

The second information includes capability information related to sensing of the UE and/or preference information related to sensing of the UE, and the fourth information includes capability information related to sensing of the access network device and/or preference information related to sensing of the access network device.

In some embodiments, the fourth information includes at least one of: whether the access network device supports a first sensing mode; whether the access network device supports a second sensing mode; a type of sensing data supported by the access network device for reporting; sensing data supported by the access network device for reporting; a sensing performance indicator supported by the access network device; a sensing mode preferred by the access network device; a type of sensing data preferred by the access network device; sensing data preferred by the access network device; a sensing performance indicator preferred by the access network device; or air interface resource overhead information (Signaling Overhead Info) of the access network device.

In some embodiments, the access network device configures multiple power saving classes or power saving modes for the UE.

In some embodiments, the access network device indicates or suggests to the UE which power saving class or power saving mode the UE currently uses.

In some embodiments, the sensing assistance information includes the second information. Exemplarily, after receiving the second information, the access network device transmits the second information to the core network element via a sensing protocol layer between the access network device and the core network element.

In some embodiments, the sensing assistance information includes the second information and the fourth information. Exemplarily, after receiving the second information, the access network device transmits the fourth information and the second information together to the core network element via the sensing protocol layer between the access network device and the core network element.

In some embodiments, there is a conflict between the second information and the fourth information, the access network device generates the sensing assistance information based on the second information and the fourth information, that is, the access network device decides which information to inform the core network element.

In some embodiments, there is a conflict between the second information and the fourth information, the access network device transmits both the second information and the fourth information to the core network element, and the core network element decides which information to use to determine the sensing mode.

For other relevant details, please refer to step 1202, which will not be repeated here.

**In step 1504**, receiving first information, where the first information includes configuration information related to sensing.

For relevant details of the first information, please refer to step 1203, which will not be repeated here.

In some embodiments, the first information is used to indicate the access network device to adopt the first sensing mode or the second sensing mode. Optionally, the first information implicitly indicates which sensing mode the access network device adopts. For example, if the first information carries configuration information of the first sensing mode, it means that the access network device is indicated to adopt the first sensing mode; for example, if the first information carries configuration information of the second sensing mode, it means that the access network device is indicated to adopt the second sensing mode. Optionally, the first information explicitly indicates which sensing mode the access network device adopts.

**In step 1505**, performing a sensing service based on the first information.

In some embodiments, the UE performs the sensing service using the sensing mode indicated by the first information. If the UE adopts the first sensing mode, it means that the UE calculates and obtains the sensing result. If the UE adopts the second sensing mode, it means that the UE does not need to calculate the sensing result, and needs to report the sensing data.

In some embodiments, the UE measures a sensing measurement quantity and/or reports measurement data according to the sensing measurement configuration information included in the first information.

In some embodiments, the UE calculates the measurement data according to the sensing assistance information used for calculation included in the first information, to obtain one or more of preliminary sensing data, intermediate sensing data, or a sensing result.

**In step 1506**, reporting sensing data and/or a sensing result.

In some embodiments, the sensing data and/or the sensing result are carried in a sensing information report.

It should be noted that the aforementioned steps 1501, 1502, 1503, 1505, and 1506 are optional steps. The execution order of different steps may be adjusted according to practical situations. Different steps may be combined or divided, exemplarily, steps 1505 and 1506 may be implemented as one step, exemplarily, step 1504 may be implemented as two steps, where the first information is transmitted in two parts. The first information is implemented as sensing assistance data (including sensing reference signal reception configuration and/or sensing assistance information used for calculation) and a sensing information request (including sensing measurement quantity, measurement configuration, reporting configuration, and sensing QoS information), and the access network device receives the sensing assistance data and the sensing information request respectively.

In summary, in the method provided in the embodiments of the present application, by configuring the access network device with configuration information related to sensing, the access network device is enabled to perform a sensing service based on the expectation and indication of the core network element, which helps to achieve the effects of power saving and air interface resource saving. Furthermore, the access network device is supported to report its own capability information and preference information as well as the capability information and preference information of the UE, to assist the core network element in determining which sensing mode to adopt, thereby accurately and targetedly transmitting configuration information corresponding to the sensing mode, which helps to improve sensing efficiency and accuracy, and reduce power consumption waste and air interface resource waste. Additionally, the access network device is supported to decide which capability information and preference information to report to the core network element, which improves the flexibility of the access network device in the sensing procedure.

FIG. 16 illustrates a schematic flowchart of a sensing method provided by an exemplary embodiment of the present application. The method is performed by a UE, an access network device, and a core network element, and includes at least one of the following steps.

**In step 1601**, the access network device transmits RRC reconfiguration information to the UE.

The RRC reconfiguration information belongs to third information. For specific details, please refer to step 1201, which will not be repeated here.

In some embodiments, the RRC reconfiguration information includes a first information element, and the first information element is used to configure whether the UE transmits second information. Exemplarily, the first information element is a sensing calculation preference configuration (SensingCalculation-PreferenceConfig).

In some embodiments, other configuration (OtherConfig) in the RRC reconfiguration information carries indication information: sensing calculation preference configuration (SensingCalculation-PreferenceConfig). For example:

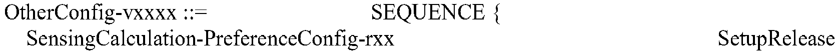

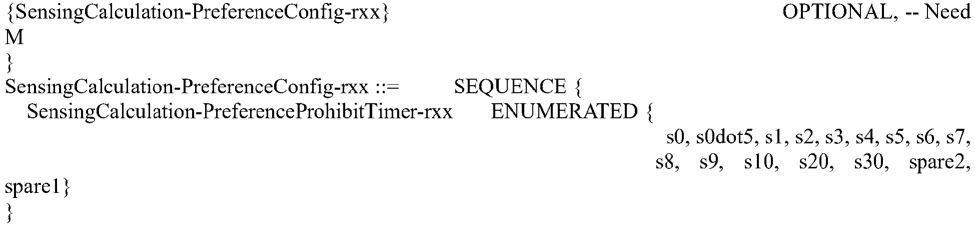

In some embodiments, the RRC reconfiguration information comes from the core network element.

**In step 1602**, the UE transmits terminal device assistance information (UEAssistanceInformation) to the access network device.

In some embodiments, when the RRC reconfiguration information includes a first information element (IE), and the first information element is used to configure the UE to transmit the second information, a first timer is started. The first timer is related to a sensing switching request message.

In some embodiments, if the RRC reconfiguration message received by the UE contains OtherConfig, and if the OtherConfig received by the UE carries indication information SensingCalculation-PreferenceConfig, and if SensingCalculation-PreferenceConfig is set to "Setup," the UE considers itself configured to provide the second information.

In some embodiments, when the UE considers itself configured to provide the second information, if the UE has a preference for sensing information processing (e.g., preference of a sensing mode, preference of a type of sensing data, preference of sensing data), and/or if the UE has not transmitted the second information via UEAssistanceInformation since the UE was configured to provide the second information, and/or if there is a change in at least one of the following items of the UE: current preference information, capability information, power saving mode, or power saving class, the UE starts a first timer.

The change in at least one of the following items of the UE: the current preference information, the capability information, the power saving mode, or the power saving class, may also be understood as the current second information being different from the information carried in the previously transmitted UEAssistanceInformation.

In some embodiments, the timing duration of the first timer is set to a sensing calculation preference prohibit time (SensingCalculation-PreferenceProhibitTimer). The design of the first timer facilitates preventing the UE from frequently transmitting the second information, which is beneficial for power saving and signaling overhead saving.

In some embodiments, when transmitting the second information, the first timer is started.

In some embodiments, during the running period of the first timer, the second information is not transmitted.

In some embodiments, after the first timer expires, the second information is transmitted.

In some embodiments, when the RRC reconfiguration information includes the first information element, and/or when the first information element is not used to configure the UE to transmit the second information, the first timer is stopped.

In some embodiments, if the RRC reconfiguration message received by the UE does not contain OtherConfig, or if the OtherConfig received by the UE does not carry the indication information SensingCalculation-PreferenceConfig, or if SensingCalculation-PreferenceConfig is not set to "Setup," the UE considers itself not configured to provide the second information.

In some embodiments, when the UE considers itself not configured to provide the second message, if the first timer is running, the UE stops the first timer.

In some embodiments, if the UE is configured to provide the second information, the UE transmits the second information to the access network device.

In some embodiments, the UE carries SensingCalculation-Preference in the UEAssistanceInformation message.

In some embodiments, if the UE has a preference for a sensing mode (i.e., preference of the first sensing mode and/or preference of the second sensing mode), the UE indicates the first sensing mode or the second sensing mode in the SensingCalculation-Preference IE.

In some embodiments, if the UE has preference of a type of sensing data, the UE indicates the type of sensing data and/or one or more levels of sensing information in the SensingCalculation-Preference IE.

In some embodiments, if the UE has preference of sensing data, the UE indicates one or more types of sensing data in the SensingCalculation-Preference IE.

In some embodiments, if the UE has preference information of a current power saving class/power saving mode, the UE selects the power saving class or power saving mode that matches the power saving requirement and carries it in the SensingCalculation-Preference IE.

In some embodiments, if the UE has no preference information of the sensing mode, the type of sensing data, the sensing data, or the power saving class/power saving mode, no preference information is carried in the SensingCalculation-Preference IE.

The terminal device assistance information belongs to the second information. For other details, please refer to step 1202, which will not be repeated here.

**In step 1603**, the access network device transmits sensing assistance information to the core network element.

For relevant details, please refer to step 1503, which will not be repeated here.

**In step 1604**, the core network element determines a sensing mode (Determines UE/SF-based sensing method).

That is, the core network element determines whether the UE adopts the first sensing mode or the second sensing mode. Optionally, the core network element determines the sensing mode adopted by the UE and the access network device based on the received sensing assistance information.

**In step 1605**, the core network element transmits sensing assistance data (Provide Sensing Assistance Data) to the UE.

The sensing assistance data belongs to the first information. For specific details, please refer to step 1203, which will not be repeated here.

Exemplarily, the sensing assistance data includes a sensing reference signal reception configuration (Sensing RS Rx Configuration) and/or sensing assistance information used for calculation (Assistance Data for UE-Based Sensing).

In some embodiments, the sensing assistance information used for calculation is related to the first sensing mode, representing the sensing assistance information used for calculation used by the UE in the first sensing mode.

**In step 1606**, the core network element transmits a sensing information request (Sensing Information Request) to the UE.

The sensing information request belongs to the first information. For specific details, please refer to step 1203, which will not be repeated here.

Exemplarily, the sensing information request includes at least one of: a sensing measurement quantity, a measurement configuration, a reporting configuration, or sensing QoS information.

In some embodiments, the information carried in the sensing information request is related to the first sensing mode or the second sensing mode, representing the measurement and reporting configuration used by the UE in the first sensing mode or the second sensing mode.

**In step 1607**, the core network element transmits the first information to the access network device.

For relevant details, please refer to step 1203 and step 1504, which will not be repeated here.

In some embodiments, the signaling interaction involved in step 1603 and step 1607 occurs at a sensing protocol layer between the access network device and the core network element.

**In step 1608**, the UE reports sensing data and/or a sensing result.

For relevant details, please refer to step 1204 and step 1205, which will not be repeated here.

In summary, in the method provided in the embodiments of the present application, by transmitting configuration information related to sensing, the UE and the access network device are enabled to perform a sensing service based on the expectation and indication of the core network element, which helps to achieve the effects of power saving and air interface resource saving. Furthermore, the UE and the access network device are supported to report their own capability information and preference information, to assist the core network element in determining which sensing mode to adopt, thereby accurately and targetedly transmitting configuration information corresponding to the sensing mode, which helps to improve sensing efficiency and accuracy, and reduce power consumption waste and air interface resource waste. Additionally, the access network device is supported to decide which capability information and preference information to report to the core network element, which improves the flexibility of the access network device in the sensing procedure.

Next, Method 2 is introduced: the core network element indicates the sensing mode based on request information of the UE and/or request information of the access network device.

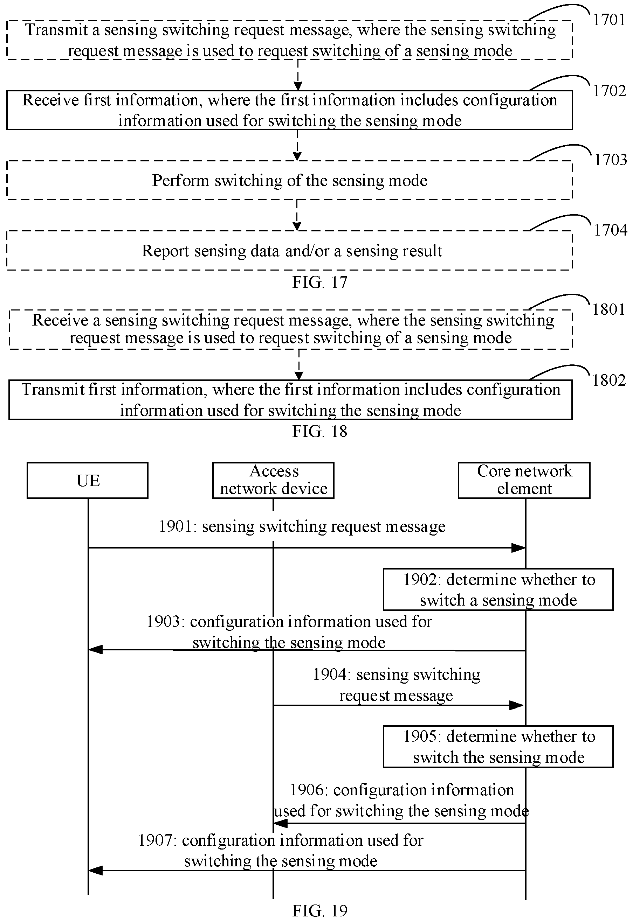

FIG. 17 illustrates a schematic flowchart of a sensing method provided by an exemplary embodiment of the present application. The method is performed by a UE and/or an access network device and includes at least one of the following steps.

**In step 1701**, transmitting a sensing switching request message, where the sensing switching request message is used to request switching of a sensing mode.

In some embodiments, the sensing switching request message implicitly indicates the sensing mode to be switched to. Exemplarily, if the current sensing mode adopted by the UE is the first sensing mode, the UE transmitting the sensing switching request message means that the UE requests to switch to the second sensing mode. Exemplarily, if the current sensing mode adopted by the access network device is the second sensing mode, the access network device transmitting the sensing switching request message means that the access network device requests to switch to the first sensing mode.

In some embodiments, the sensing switching request message explicitly indicates the sensing mode to be switched to.

**In step 1702**, receiving first information, where the first information includes configuration information used for switching the sensing mode.

### If the executor of step 1702 is the UE:

In some embodiments, the configuration information used for switching the sensing mode includes at least one of: configuration information of the first sensing mode, configuration information of the second sensing mode, first acknowledgment (ACK) information, first negative acknowledgment (NACK) information, or configuration information of a first timer.

The first ACK information is used to indicate that the UE is allowed to switch the sensing mode. Exemplarily, if the sensing switching request message is used to request switching from the first sensing mode to the second sensing mode, and the first information received by the UE includes the first ACK information, it means that the core network element allows the UE to switch from the first sensing mode to the second sensing mode. Exemplarily, if the sensing switching request message is used to request switching from the second sensing mode to the first sensing mode, and the first information received by the UE includes the first ACK information, it means that the core network element allows the UE to switch from the second sensing mode to the first sensing mode.

The first NACK information is used to indicate that the UE is not allowed to switch the sensing mode. Exemplarily, if the sensing switching request message is used to request switching from the first sensing mode to the second sensing mode, and the first information received by the UE includes the first NACK information, it means that the core network element does not allow the UE to switch from the first sensing mode to the second sensing mode. Exemplarily, if the sensing switching request message is used to request switching from the second sensing mode to the first sensing mode, and the first information received by the UE includes the first NACK information, it means that the core network element does not allow the UE to switch from the second sensing mode to the first sensing mode.

In some embodiments, the first information implicitly indicates that the UE adopts the first sensing mode or the second sensing mode. For example, if the first information carries configuration information of the first sensing mode, it means that the UE is indicated to adopt the first sensing mode; for example, if the first information carries configuration information of the second sensing mode, it means that the UE is indicated to adopt the second sensing mode.

In some embodiments, the first information explicitly indicates that the UE adopts the first sensing mode or the second sensing mode.

In some embodiments, the first information indicates the UE to adopt the first sensing mode. Optionally, the first information further includes sensing assistance information used for calculation and/or sensing measurement configuration information.

In some embodiments, the first information indicates that the UE is not allowed to switch the sensing mode, or the first information indicates the UE to maintain the current sensing mode, or the sensing mode indicated by the first information is the same as the current sensing mode of the UE.

In some embodiments, the UE further receives configuration information of a first timer to prevent the UE from frequently transmitting the sensing switching request message, which is beneficial for power saving and signaling overhead saving. Optionally, the configuration information of the first timer is transmitted together with the first NACK information, and the UE receives the configuration information of the first timer and the first NACK information together. Optionally, the configuration information of the first timer is carried in the first NACK information. Optionally, the configuration information of the first timer is transmitted before the first NACK information, and the UE first receives the configuration information of the first timer and then receives the first NACK information.

In some embodiments, when receiving the first NACK information, the UE starts the first timer.

In some embodiments, when receiving the first ACK information, the UE stops the first timer.

In some embodiments, when transmitting the sensing switching request message, the UE stops the first timer.

In some embodiments, during the running period of the first timer, the UE does not transmit the sensing switching request message.

In some embodiments, after the first timer expires, the UE transmits the sensing switching request message.

### If the executor of step 1702 is the access network device:

In some embodiments, the configuration information used for switching the sensing mode includes at least one of: configuration information of the first sensing mode, configuration information of the second sensing mode, second ACK information, or second NACK information.

The second ACK information is used to indicate that the access network device is allowed to switch the sensing mode. Exemplarily, if the sensing switching request message is used to request switching from the first sensing mode to the second sensing mode, and the first information received by the access network device includes the second ACK information, it means that the core network element allows the access network device to switch from the first sensing mode to the second sensing mode. Exemplarily, if the sensing switching request message is used to request switching from the second sensing mode to the first sensing mode, and the first information received by the access network device includes the second ACK information, it means that the core network element allows the access network device to switch from the second sensing mode to the first sensing mode.

The second NACK information is used to indicate that the access network device is not allowed to switch the sensing mode. Exemplarily, if the sensing switching request message is used to request switching from the first sensing mode to the second sensing mode, and the first information received by the access network device includes the second NACK information, it means that the core network element does not allow the access network device to switch from the first sensing mode to the second sensing mode. Exemplarily, if the sensing switching request message is used to request switching from the second sensing mode to the first sensing mode, and the first information received by the access network device includes the second NACK information, it means that the core network element does not allow the access network device to switch from the second sensing mode to the first sensing mode.

In some embodiments, the first information implicitly indicates that the access network device adopts the first sensing mode or the second sensing mode. Alternatively, the first information explicitly indicates that the access network device adopts the first sensing mode or the second sensing mode.

In some embodiments, the first information indicates the access network device to adopt the first sensing mode. Optionally, the access network device further transmits the first information to the UE, where the first information further includes sensing assistance information used for calculation and/or sensing measurement configuration information.

In some embodiments, the first information indicates that the access network device is not allowed to switch the sensing mode, or the first information indicates the access network device to maintain the current sensing mode, or the sensing mode indicated by the first information is the same as the current sensing mode of the access network device. Optionally, the access network device further transmits configuration information of a first timer to the UE to prevent the UE from frequently transmitting the sensing switching request message, which is beneficial for power saving and signaling overhead saving.

For other details, please refer to step 1203, which will not be repeated here.

**In step 1703**, performing switching of the sensing mode.

When the first information includes configuration information used for switching the sensing mode, the switching of the sensing mode is performed based on the configuration information used for switching the sensing mode.

In some embodiments, when the configuration information used for switching the sensing mode includes configuration information of the first sensing mode, the sensing mode is switched to the first sensing mode.

In some embodiments, when the configuration information used for switching the sensing mode includes configuration information of the second sensing mode, the sensing mode is switched to the second sensing mode.

In some embodiments, when the configuration information used for switching the sensing mode includes ACK information, switching of the sensing mode is performed.

In some embodiments, when the configuration information used for switching the sensing mode includes NACK information, switching of the sensing mode is not performed.

**In step 1704**, reporting sensing data and/or a sensing result.

Based on the switched sensing mode, the sensing service is performed to obtain the sensing data and/or the sensing result, and the sensing data and/or the sensing result are reported. For relevant details, please refer to step 1204 and step 1205, which will not be repeated here.

It should be noted that step 1701, step 1703, and step 1704 are optional steps.

In summary, in the method provided in the embodiments of the present application, by transmitting configuration information related to sensing, the UE and the access network device are enabled to perform switching of a sensing mode based on the expectation and indication of the core network element, which helps to achieve the effects of power saving and air interface resource saving. Furthermore, the UE and the access network device are supported to transmit request information to assist the core network element in determining whether to switch the sensing mode, thereby accurately and targetedly transmitting configuration information corresponding to the sensing mode, which helps to improve sensing efficiency and accuracy, and reduce power consumption waste and air interface resource waste.

FIG. 18 illustrates a schematic flowchart of a sensing method provided in an exemplary embodiment of the present application. The method is performed by a core network element, and the method includes at least one of the following steps.

**In step 1801**, receiving a sensing switching request message, where the sensing switching request message is used to request switching of a sensing mode.

The sensing switching request message may come from a UE or an access network device. For specific details, please refer to step 1701, which will not be repeated here.

**In step 1802**, transmitting first information, where the first information includes configuration information used for switching the sensing mode.

For specific details, please refer to step 1802, which will not be repeated here.

It should be noted that step 1801 is an optional step.

In summary, in the method provided in the embodiments of the present application, by transmitting configuration information related to sensing, the UE and the access network device are enabled to perform switching of a sensing mode based on the expectation and indication of the core network element, which helps to achieve the effects of power saving and air interface resource saving. Furthermore, the UE and the access network device are supported to transmit request information to assist the core network element in determining whether to switch the sensing mode, thereby accurately and targetedly transmitting configuration information corresponding to the sensing mode, which helps to improve sensing efficiency and accuracy, and reduce power consumption waste and air interface resource waste.

FIG. 19 illustrates a schematic flowchart of a sensing method provided in an exemplary embodiment of the present application. The method is performed by a UE, an access network device, and a core network element, and the method includes at least one of the following steps.

**In step 1901**, the UE transmits a sensing switching request message to the core network element.

For relevant details, please refer to step 1701, which will not be repeated here.

**In step 1902**, the core network element determines whether to switch a sensing mode (Determines whether to switch).

In some embodiments, the core network element determines whether to switch the sensing mode based on the sensing switching request message and/or the second information and/or fourth information and/or sensing assistance information.

**In step 1903**, the core network element transmits configuration information used for switching the sensing mode to the UE.

In some embodiments, the configuration information used for switching the sensing mode includes first ACK information or first NACK information. Optionally, the configuration information used for switching the sensing mode further includes one or more of: configuration information of the first sensing mode, configuration information of the second sensing mode, or configuration information of a first timer.

For relevant details, please refer to step 1702, which will not be repeated here.

**In step 1904**, the access network device transmits a sensing switching request message to the core network element.

For relevant details, please refer to step 1701, which will not be repeated here.

**In step 1905**, the core network element determines whether to switch the sensing mode.

**In step 1906**, the core network element transmits configuration information used for switching the sensing mode to the access network device.

In some embodiments, the configuration information used for switching the sensing mode includes the second ACK information or the second NACK information. Optionally, the configuration information used for switching the sensing mode further includes one or more of: configuration information of the first sensing mode or configuration information of the second sensing mode.

For relevant details, please refer to step 1702, which will not be repeated here.

**In step 1907**, the core network element transmits configuration information used for switching the sensing mode to the UE.

In some embodiments, in addition to performing step 1906, the core network element further indicates the UE to switch the sensing mode (indicate to switch between UE/SF-based sensing).

For relevant details, please refer to step 1702, which will not be repeated here.

In summary, in the method provided in the embodiments of the present application, by transmitting configuration information related to sensing, the UE and the access network device are enabled to perform switching of a sensing mode based on the expectation and indication of the core network element, which helps to achieve the effects of power saving and air interface resource saving. Furthermore, the UE and the access network device are supported to transmit request information to assist the core network element in determining whether to switch the sensing mode, thereby accurately and targetedly transmitting configuration information corresponding to the sensing mode, which helps to improve sensing efficiency and accuracy, and reduce power consumption waste and air interface resource waste.

Finally, Method 3 is introduced: the UE autonomously determines the sensing mode.

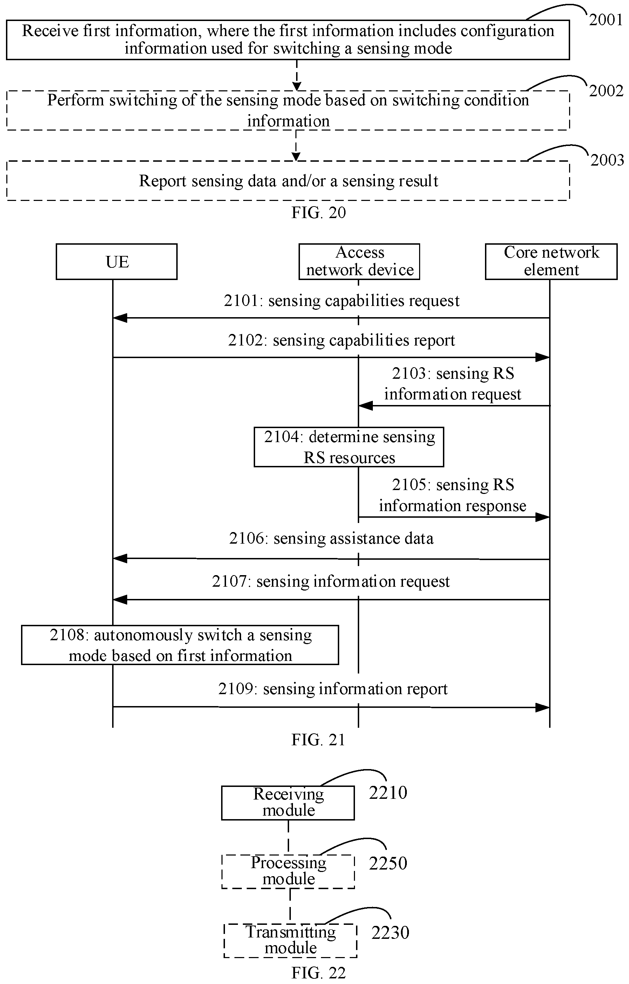

FIG. 20 illustrates a schematic flowchart of a sensing method provided in an exemplary embodiment of the present application. The method is performed by a UE, and the method includes at least one of the following steps.

**In step 2001,** receiving first information, where the first information includes configuration information used for switching a sensing mode.

In some embodiments, the configuration information used for switching the sensing mode includes switching condition information of the sensing mode.

In some embodiments, the switching condition information of the sensing mode includes at least one of: a first threshold, related to sensing calculation complexity; or a second threshold, related to an amount of uplink sensing data.

In some embodiments, the first threshold includes, for example, a delay threshold, a calculation complexity threshold, etc. Exemplarily, the UE may perform preliminary processing on sensing measurement data. In a case where the sensing calculation complexity is low and the processing time of the UE meets the delay requirement, the UE reports a sensing result to the network based on the first sensing mode, which may save air interface transmission resources. Exemplarily, when the calculation complexity exceeds the first threshold, the UE transmits complete sensing data to the network side based on the second sensing mode, and activates the second sensing mode.

In some embodiments, the second threshold includes, for example, an uplink sensing data amount threshold (ul-DataThreshold). Exemplarily, in a case where the sensing measurement quantity changes significantly due to environmental changes or other reasons, and the amount of sensing data generated by the UE exceeds the second threshold, the UE performs certain processing on the sensing measurement quantity based on the first sensing mode and then reports a sensing result to the network. Exemplarily, in a case where the amount of sensing data generated by the UE is less than the second threshold, the UE transmits complete sensing data to the network side based on the second sensing mode, and activates the second sensing mode.

In some embodiments, the configuration information used for switching the sensing mode is pre-configured.

**In step 2002**, performing switching of the sensing mode based on the switching condition information.

In some embodiments, in a case where the current sensing calculation complexity is less than or equal to the first threshold, the UE and/or the access network device switches from the second sensing mode to the first sensing mode.

In some embodiments, in a case where the current sensing calculation complexity is greater than the first threshold, the UE and/or the access network device switches from the first sensing mode to the second sensing mode.

In some embodiments, in a case where the current sensing calculation complexity is less than or equal to the first threshold, the UE reports a sensing result based on the first sensing mode. In a case where the current sensing calculation complexity is greater than the first threshold, the UE reports the sensing data.

In some embodiments, in a case where the current amount of uplink sensing data is less than or equal to the second threshold, the UE and/or the access network device switches from the first sensing mode to the second sensing mode.

In some embodiments, in a case where the current amount of uplink sensing data is greater than the first threshold, the UE and/or the access network device switches from the second sensing mode to the first sensing mode.

In some embodiments, in a case where the current amount of uplink sensing data is less than or equal to the second threshold, the UE reports the sensing data. In a case where the current amount of uplink sensing data is greater than the second threshold, the UE reports the sensing result based on the first sensing mode.

**In step 2003**, reporting sensing data and/or a sensing result.

Based on the switched sensing mode, the sensing service is performed to obtain the sensing data and/or the sensing result, and the sensing data and/or sensing result is reported. For relevant details, please refer to step 1204 and step 1205, which will not be repeated here.

In some embodiments, the sensing data and/or the sensing result are carried in a sensing information report.

In some embodiments, the sensing information report is further used to implicitly indicate that the UE has switched the sensing mode. For example, in the first sensing mode, the UE reports the sensing result; if the UE reports the sensing result, it indicates that the UE has switched to the first sensing mode. For example, in the second sensing mode, the UE reports the sensing data; if the UE reports the sensing data, it indicates that the UE has switched to the second sensing mode.

In some embodiments, the UE transmits a notification message, which is used to explicitly indicate that the UE has switched a sensing mode.

It should be noted that step 2002 and step 2003 are optional steps.

In summary, in the method provided in the embodiments of the present application, by configuring configuration information used for switching a sensing mode, the UE is enabled to autonomously perform switching of the sensing mode based on the switching condition information, which helps to achieve the effects of power saving and air interface resource saving. Furthermore, the UE is supported to indicate that it has switched the sensing mode, so that the network side is aware of the switching behavior of the UE, which helps to ensure efficiency and consistency within the system, improve sensing efficiency and accuracy, and reduce power consumption waste and air interface resource waste.

FIG. 21 illustrates a schematic flowchart of a sensing method provided in an exemplary embodiment of the present application. The method is performed by a UE, an access network device, and a core network element, and the method includes at least one of the following steps.

**In step 2101**, the core network element transmits a sensing capabilities request to the UE.

The sensing capabilities request belongs to the third information. For specific details, please refer to step 1201, which will not be repeated here.

**In step 2102**, the UE transmits a sensing capabilities report to the core network element.

The sensing capabilities report belongs to the second information. For specific details, please refer to step 1202, which will not be repeated here.

**In step 2103**, the core network element transmits a sensing reference signal information request (Sensing RS Info Request) to the access network device.

**In step 2104**, the access network device determines sensing reference signal resources (gNB determines Sensing RS Resources).

The sensing reference signal resources include, for example, at least one of: time domain resources, frequency domain resources, or spatial domain resources.

**In step 2105**, the access network device transmits a sensing reference signal information response (Sensing RS Info Response) to the core network element.

**In step 2106**, the core network element transmits sensing assistance data (Provide Sensing Assistance Data) to the UE.

The sensing assistance data belongs to the first information. For specific details, please refer to step 1203 and step 1404, which will not be repeated here.

In some embodiments, the configuration information used for switching the sensing mode as described in step 2001 is carried in the sensing assistance data.

**In step 2107**, the core network element transmits a sensing information request (Sensing Information Request) to the UE.

The sensing information request belongs to the first information. For specific details, please refer to step 1203 and step 1405, which will not be repeated here.

In some embodiments, the configuration information used for switching the sensing mode as described in step 2001 is carried in the sensing information request.

**In step 2108**, the UE autonomously switches the sensing mode based on the first information.

In some embodiments, the UE measures the sensing reference signal and autonomously decides, based on the switching condition information, whether to perform calculation of the sensing result.

For relevant details, please refer to step 2002, which will not be repeated here.

**In step 2109**, the UE transmits a sensing information report (Sensing Information Report).

The sensing information report includes sensing data (Sensing Measurement) and/or a sensing result (Sensing Result).

For relevant details, please refer to step 1204 and step 1205, which will not be repeated here.

In summary, in the method provided in the embodiments of the present application, by configuring configuration information used for switching a sensing mode, the UE is enabled to autonomously perform switching of the sensing mode based on the switching condition information, which helps to achieve the effects of power saving and air interface resource saving. Furthermore, the UE is supported to indicate that it has switched the sensing mode, so that the network side is aware of the switching behavior of the UE, which helps to ensure efficiency and consistency within the system, improve sensing efficiency and accuracy, and reduce power consumption waste and air interface resource waste.

FIG. 22 illustrates a schematic structural diagram of a sensing apparatus provided in an exemplary embodiment of the present application. The apparatus may be implemented as a terminal device or a part of the terminal device, and the terminal device may be implemented as one or more of the terminal devices illustrated in FIG. 1 and FIG. 2. The apparatus includes a receiving module 2210. Optionally, the apparatus further includes at least a portion of a transmitting module 2230 and a processing module 2250.

The receiving module 2210 is configured to receive first information, where the first information includes configuration information related to sensing.

In some embodiments, the first information includes at least one of: sensing measurement configuration information, sensing assistance information used for calculation, or configuration information used for switching a sensing mode.

In some embodiments, the sensing measurement configuration information includes at least one of: a sensing measurement quantity, a measurement configuration, a reporting configuration, sensing QoS information, or reception configuration information of a sensing signal.

In some embodiments, the apparatus further includes the transmitting module 2230, configured to transmit second information, where the second information includes capability information related to sensing of the apparatus and/or preference information related to sensing of the apparatus.

In some embodiments, the second information includes at least one of: whether the apparatus supports a first sensing mode, where the first sensing mode is an apparatus-based sensing mode; whether the apparatus supports a second sensing mode, where the second sensing mode is a core network element-based sensing mode; a type of sensing data supported by the apparatus for reporting; sensing data supported by the apparatus for reporting; a sensing performance indicator supported by the apparatus; a sensing mode preferred by the apparatus; a type of sensing data preferred by the apparatus; sensing data preferred by the apparatus; a sensing performance indicator preferred by the apparatus; or a current power saving class of the apparatus.

In some embodiments, the type of sensing data includes at least one of: raw sensing data, preliminary sensing data, intermediate sensing data, or a sensing result.

In some embodiments, the sensing data includes at least one of: velocity, delay, Doppler shift, an angle, signal strength, distance, orientation, or acceleration.

In some embodiments, the sensing performance indicator includes at least one of: sensing service delay, refresh rate, or sensing accuracy.

In some embodiments, the receiving module 2210 is further configured to receive third information, where the third information is used to request or configure the apparatus to transmit the second information.

In some embodiments, the third information includes sensing capabilities request information, and the second information includes a sensing capabilities report; or, the third information includes RRC reconfiguration information, and the second information includes device assistance information.

In some embodiments, the apparatus further includes the processing module 2250, configured to, in a case where the RRC reconfiguration information includes a first information element, and the first information element is used to configure the apparatus to transmit the second information, start a first timer, where the first timer is related to a sensing switching request message.

In some embodiments, the processing module 2250 is further configured to, in a case where the RRC reconfiguration information includes a first information element, and the first information element is not used to configure the apparatus to transmit the second information, stop a first timer, where the first timer is related to a sensing switching request message.

In some embodiments, the transmitting module 2230 is configured to transmit a sensing switching request message, where the sensing switching request message is used to request switching of a sensing mode.

In some embodiments, the processing module 2250 is further configured to, in a case where the first information includes the configuration information used for switching a sensing mode, perform switching of the sensing mode based on the configuration information used for switching the sensing mode.

In some embodiments, the configuration information used for switching the sensing mode includes at least one of: configuration information of a first sensing mode; configuration information of a second sensing mode; first ACK information, used to indicate that the apparatus is allowed to switch the sensing mode; first NACK information, used to indicate that the apparatus is not allowed to switch the sensing mode; configuration information of a first timer, where the first timer is related to a sensing switching request message; or switching condition information of the sensing mode.

In some embodiments, the processing module 2250 is further configured to at least one of: in a case where the configuration information used for switching the sensing mode includes the configuration information of the first sensing mode, switch the sensing mode to the first sensing mode; in a case where the configuration information used for switching the sensing mode includes the configuration information of the second sensing mode, switch the sensing mode to the second sensing mode; in a case where the configuration information used for switching the sensing mode includes the ACK information, perform switching of the sensing mode; or in a case where the configuration information used for switching the sensing mode includes the NACK information, not perform switching of the sensing mode.

In some embodiments, the processing module 2250 is further configured to at least one of: in a case where the first NACK information is received, start the first timer, where the first NACK information is used to indicate that the apparatus is not allowed to switch the sensing mode; in a case where the first ACK information is received, stop the first timer, where the first ACK information is used to indicate that the apparatus is allowed to switch the sensing mode; or in a case where second information is transmitted, start the first timer, where the second information includes the capability information related to sensing of the apparatus and/or the preference information related to sensing of the apparatus.

In some embodiments, the transmitting module 2230 is further configured to at least one of: during running of the first timer, not transmit the second information; after the first timer expires, transmit the second information; in a case where a sensing switching request message is transmitted, stop the first timer; during running of the first timer, not transmit a sensing switching request message; or after the first timer expires, transmit a sensing switching request message.

In some embodiments, the switching condition information of the sensing mode includes at least one of: a first threshold, related to sensing calculation complexity; or a second threshold, related to an amount of uplink sensing data.

In some embodiments, the processing module 2250 is further configured to at least one of: in a case where current sensing calculation complexity is less than or equal to the first threshold, switch from the second sensing mode to the first sensing mode; in a case where current sensing calculation complexity is greater than the first threshold, switch from the first sensing mode to the second sensing mode; in a case where a current amount of uplink sensing data is less than or equal to the second threshold, switch from the first sensing mode to the second sensing mode; or in a case where a current amount of uplink sensing data is greater than the first threshold, switch from the second sensing mode to the first sensing mode.

In some embodiments, the transmitting module 2230 is further configured to at least one of: in a case where current sensing calculation complexity is less than or equal to the first threshold, report a sensing result based on the first sensing mode; in a case where current sensing calculation complexity is greater than the first threshold, transmit sensing data; in a case where a current amount of uplink sensing data is less than or equal to the second threshold, transmit sensing data; or in a case where a current amount of uplink sensing data is greater than the second threshold, report a sensing result based on the first sensing mode.

In some embodiments, the processing module 2250 is further configured to obtain sensing data and/or a sensing result based on the first information.

In some embodiments, the transmitting module 2230 is further configured to report the sensing data and/or the sensing result.

In some embodiments, the sensing data and/or the sensing result are carried in a sensing information report.

In some embodiments, the sensing information report is further used to implicitly indicate that the apparatus has switched the sensing mode.

In some embodiments, the transmitting module 2230 is further configured to transmit a notification message, where the notification message is used to explicitly indicate that the apparatus has switched a sensing mode.

In some embodiments, the receiving module 2210 is configured to perform one or more of the following steps: step 1101, step 1201, step 1203, step 1401, step 1404, step 1405, step 1601, step 1605, step 1606, step 1702, step 1903, step 1907, step 2001, step 2101, step 2106, or step 2107.

In some embodiments, the transmitting module 2230 is configured to perform one or more of the following steps: step 1202, step 1205, step 1402, step 1406, step 1602, step 1608, step 1701, step 1704, step 1901, step 2003, step 2102, or step 2109.

In some embodiments, the processing module 2250 is configured to perform one or more of the following steps: step 1204, step 1703, step 2002, or step 2108.

In summary, the apparatus provided in the embodiments of the present application, by means of configuration information related to sensing, may perform a sensing service based on the expectation and indication of a network side, which helps to achieve the effects of power saving and air interface resource saving. Furthermore, the apparatus is supported to report its own capability information and preference information to assist the network side in determining which sensing mode to adopt; the apparatus is also supported to transmit request information to assist the core network element in determining whether to switch the sensing mode, thereby supporting the network side to accurately and targetedly transmit configuration information corresponding to the sensing mode, which helps to improve sensing efficiency and accuracy, and reduce power consumption waste and air interface resource waste. Additionally, the apparatus is supported to autonomously perform switching of the sensing mode based on switching condition information, which helps to further improve the effects of power saving and air interface resource saving; the apparatus is also supported to indicate to the network side that it has switched the sensing mode, so that the network side is aware of the autonomous switching behavior of the apparatus, which helps to ensure efficiency and consistency within the system.

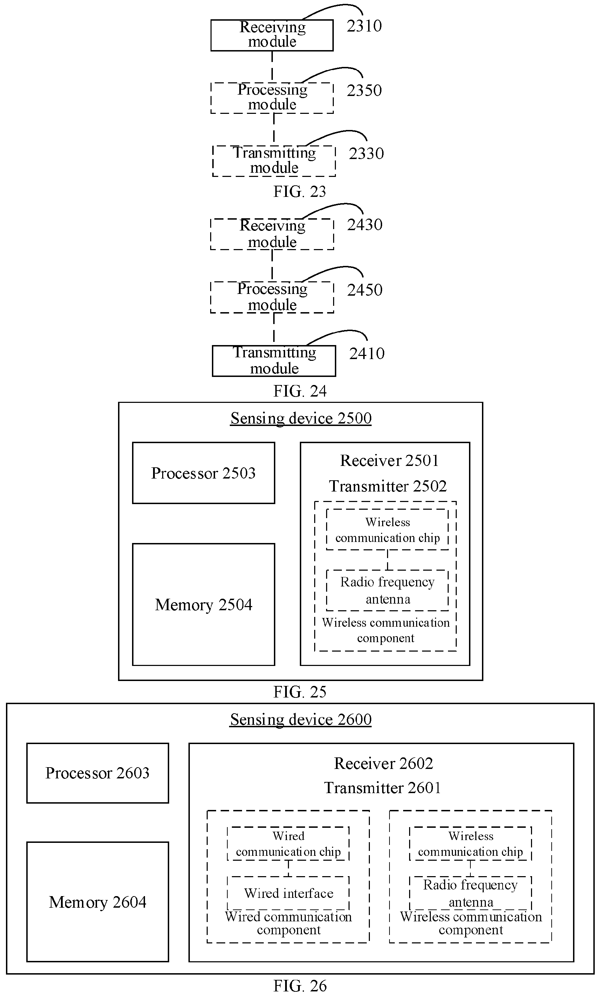

FIG. 23 illustrates a structural block diagram of a sensing apparatus provided in an exemplary embodiment of the present application. The apparatus may be implemented as an access network device or a part of the access network device, and the access network device may be implemented as one or more of the access network devices illustrated in FIG. 1 and FIG. 2. The apparatus includes a receiving module 2310. Optionally, the apparatus further includes at least a portion of a transmitting module 2330 and a processing module 2350.

The receiving module 2310 is configured to receive first information, where the first information includes configuration information related to sensing.

In some embodiments, the first information includes at least one of: sensing measurement configuration information, sensing assistance information used for calculation, or configuration information used for switching a sensing mode.

In some embodiments, the sensing measurement configuration information includes at least one of: a sensing measurement quantity, a measurement configuration, a reporting configuration, sensing QoS information, or reception configuration information of a sensing signal.

In some embodiments, the apparatus further includes the transmitting module 2330, which is configured to transmit sensing assistance information, where the sensing assistance information is generated based on second information and/or fourth information, where the second information includes capability information related to sensing of a terminal device and/or preference information related to sensing of the terminal device, and the fourth information includes capability information related to sensing of the apparatus and/or preference information related to sensing of the apparatus.

In some embodiments, the fourth information includes at least one of: whether the apparatus supports a first sensing mode, where the first sensing mode is a terminal device-based sensing mode; whether the apparatus supports a second sensing mode, where the second sensing mode is a core network element-based sensing mode; a type of sensing data supported by the apparatus for reporting; sensing data supported by the apparatus for reporting; a sensing performance indicator supported by the apparatus; a sensing mode preferred by the apparatus; a type of sensing data preferred by the apparatus; sensing data preferred by the apparatus; a sensing performance indicator preferred by the apparatus; or air interface resource overhead information of the apparatus.

In some embodiments, the receiving module 2310 is further configured to receive the second information. The second information includes at least one of: whether the terminal device supports a first sensing mode, where the first sensing mode is a terminal device-based sensing mode; whether the terminal device supports a second sensing mode, where the second sensing mode is a core network element-based sensing mode; a type of sensing data supported by the terminal device for reporting; sensing data supported by the terminal device for reporting; a sensing performance indicator supported by the terminal device; a sensing mode preferred by the terminal device; a type of sensing data preferred by the terminal device; sensing data preferred by the terminal device; a sensing performance indicator preferred by the terminal device; or a current power saving class of the terminal device.

In some embodiments, the type of sensing data includes at least one of: raw sensing data, preliminary sensing data, intermediate sensing data, or a sensing result.

In some embodiments, the sensing data includes at least one of: velocity, delay, Doppler shift, an angle, signal strength, distance, orientation, or acceleration.

In some embodiments, the sensing performance indicator includes at least one of: sensing service delay, refresh rate, or sensing accuracy.

In some embodiments, the receiving module 2310 is further configured to receive third information, where the third information is used to request or configure a terminal device to transmit second information.

In some embodiments, the third information includes sensing capabilities request information, and the second information includes a sensing capabilities report; or, the third information includes RRC reconfiguration information, and the second information includes apparatus assistance information.

In some embodiments, the transmitting module 2330 is further configured to transmit a sensing switching request message, where the sensing switching request message is used to request switching of a sensing mode.

In some embodiments, the apparatus further includes a processing module 2350, configured to, in a case where the first information includes the configuration information used for switching a sensing mode, perform switching of the sensing mode based on the configuration information used for switching the sensing mode.

In some embodiments, the configuration information used for switching the sensing mode includes at least one of: second ACK information, used to indicate that the apparatus is allowed to switch the sensing mode; second NACK information, used to indicate that the apparatus is not allowed to switch the sensing mode; configuration information of a first sensing mode; or configuration information of a second sensing mode.

In some embodiments, the processing module 2350 is further configured to at least one of: in a case where the configuration information used for switching the sensing mode includes the configuration information of the first sensing mode, switch the sensing mode to the first sensing mode; in a case where the configuration information used for switching the sensing mode includes the configuration information of the second sensing mode, switch the sensing mode to the second sensing mode; in a case where the configuration information used for switching the sensing mode includes the ACK information, perform switching of the sensing mode; or in a case where the configuration information used for switching the sensing mode includes the NACK information, not perform switching of the sensing mode.

In some embodiments, the processing module 2350 is further configured to obtain sensing data and/or a sensing result based on the first information.

In some embodiments, the transmitting module 2330 is further configured to report the sensing data and/or the sensing result.

In some embodiments, the receiving module 2310 is further configured to receive the sensing data and/or the sensing result from a terminal device based on the first information.

In some embodiments, the receiving module 2310 is configured to perform one or more of the following steps: step 1502, step 1504, step 1602, step 1607, step 1702, step 1906, step 2001, or step 2103.

In some embodiments, the transmitting module 2330 is configured to perform one or more of the following steps: step 1501, step 1503, step 1506, step 1603, step 1608, step 1701, step 1704, step 1904, step 2003, or step 2105.

In some embodiments, the processing module 2350 is configured to perform one or more of the following steps: step 1505, step 1703, step 2002, or step 2104.

In summary, the apparatus provided in the embodiments of the present application, by means of configuration information related to sensing, may perform a sensing service based on expectation and indication of a network side, which helps to achieve the effects of power saving and air interface resource saving. Furthermore, the apparatus is supported to report its own capability information and preference information to assist the network side in determining which sensing mode to adopt; the apparatus is also supported to transmit request information to assist the core network element in determining whether to switch the sensing mode, thereby supporting accurate and targeted transmitting of configuration information corresponding to the sensing mode, which helps to improve sensing efficiency and accuracy, and reduce power consumption waste and air interface resource waste.

FIG. 24 illustrates a structural block diagram of a sensing apparatus provided in an exemplary embodiment of the present application. The apparatus may be implemented as a core network element or a part of the core network element, and the core network element may be implemented as one or more of the core network elements illustrated in FIG. 1 and FIG. 2. The apparatus includes a transmitting module 2410. Optionally, the apparatus further includes at least a portion of a receiving module 2430 and a processing module 2450.

The transmitting module 2410 is configured to transmit first information, where the first information includes configuration information related to sensing.

In some embodiments, the first information includes at least one of: sensing measurement configuration information, sensing assistance information used for calculation, or configuration information used for switching a sensing mode.

In some embodiments, the sensing measurement configuration information includes at least one of: a sensing measurement quantity, a measurement configuration, a reporting configuration, sensing QoS information, or reception configuration information of a sensing signal.

In some embodiments, the apparatus further includes the receiving module 2430, configured to receive at least one of: second information, fourth information, or sensing assistance information, where the second information includes capability information related to sensing of a terminal device and/or preference information related to sensing of the terminal device, the fourth information includes capability information related to sensing of an access network device and/or preference information related to sensing of the access network device, and the sensing assistance information is generated according to the second information and/or the fourth information.

In some embodiments, the second information includes at least one of: whether the apparatus supports a first sensing mode, where the first sensing mode is an apparatus-based sensing mode; whether the apparatus supports a second sensing mode, where the second sensing mode is an apparatus-based sensing mode; a type of sensing data supported by the apparatus for reporting; sensing data supported by the apparatus for reporting; a sensing performance indicator supported by the apparatus; a sensing mode preferred by the apparatus; a type of sensing data preferred by the apparatus; sensing data preferred by the apparatus; a sensing performance indicator preferred by the apparatus; or a current power saving class of the apparatus.

In some embodiments, the type of sensing data includes at least one of: raw sensing data, preliminary sensing data, intermediate sensing data, or a sensing result.

In some embodiments, the sensing data includes at least one of: velocity, delay, Doppler shift, an angle, signal strength, distance, orientation, or acceleration.

In some embodiments, the sensing performance indicator includes at least one of: sensing service delay, refresh rate, or sensing accuracy.

In some embodiments, the fourth information includes at least one of: whether the access network device supports a first sensing mode, where the first sensing mode is a terminal device-based sensing mode; whether the access network device supports a second sensing mode, where the second sensing mode is an apparatus-based sensing mode; a type of sensing data supported by the access network device for reporting; sensing data supported by the access network device for reporting; a sensing performance indicator supported by the access network device; a sensing mode preferred by the access network device; a type of sensing data preferred by the access network device; sensing data preferred by the access network device; a sensing performance indicator preferred by the access network device; or air interface resource overhead information of the access network device.

In some embodiments, the transmitting module 2410 is configured to transmit third information, where the third information is used to request or configure the terminal device to transmit the second information.

In some embodiments, the third information includes sensing capabilities request information, and the second information includes a sensing capabilities report; or, the third information includes RRC reconfiguration information, and the second information includes terminal device assistance information.

In some embodiments, the configuration information used for switching the sensing mode includes at least one of: configuration information of a first sensing mode; configuration information of a second sensing mode; first ACK information, used to indicate that a terminal device is allowed to switch the sensing mode; first NACK information, used to indicate that the terminal device is not allowed to switch the sensing mode; configuration information of a first timer, where the first timer is related to a sensing switching request message; switching condition information of the sensing mode; second ACK information, used to indicate that an access network device is allowed to switch the sensing mode; or second NACK information, used to indicate that the access network device is not allowed to switch the sensing mode.

In some embodiments, the receiving module 2430 is further configured to receive a sensing switching request message, where the sensing switching request message is used to request switching of a sensing mode.

In some embodiments, the receiving module 2430 is further configured to receive sensing data, where the sensing data is obtained based on the first information.

In some embodiments, the apparatus further includes the processing module 2450, which is configured to obtain a sensing result based on the sensing data.

In some embodiments, the receiving module 2430 is further configured to receive a sensing result, where the sensing result is obtained based on the first information.

In some embodiments, the apparatus includes an SF or an LMF.

In some embodiments, the transmitting module 2410 is configured to perform one or more of the following steps: step 1301, step 1303, step 1401, step 1404, step 1405, step 1605, step 1606, step 1607, step 1802, step 1903, step 1906, step 1907, step 2101, step 2103, step 2106, or step 2107.

In some embodiments, the receiving module 2430 is configured to perform one or more of the following steps: step 1302, step 1402, step 1406, step 1603, step 1608, step 1801, step 1901, step 1904, step 2102, or step 2105.

In some embodiments, the processing module 2450 is configured to perform one or more of the following steps: step 1403, step 1604, step 1902, or step 1905.

In summary, the apparatus provided in the embodiments of the present application, by transmitting configuration information related to sensing, enables the UE and the access network device to perform switching of a sensing mode based on expectation and indication of the apparatus, which helps to achieve the effects of power saving and air interface resource saving. Furthermore, the UE and the access network device are supported to transmit request information to assist the apparatus in determining whether to switch the sensing mode, thereby accurately and targetedly transmitting configuration information corresponding to the sensing mode, which helps to improve sensing efficiency and accuracy, and reduce power consumption waste and air interface resource waste. Additionally, by means of the configuration information used for switching a sensing mode, the apparatus enables the UE to autonomously perform switching of the sensing mode based on the switching condition information, which further improves the effects of power saving and air interface resource saving.

It should be noted that when the apparatus provided in the above embodiments implements its functions, the division of the above functional modules is used only as an example for illustration. In practical applications, the above functions may be allocated to different functional modules as needed. That is, the internal structure of the terminal device is divided into different functional modules to complete all or part of the functions described above. Additionally, the apparatus provided in the above embodiments and the method embodiments belong to the same concept.

FIG. 25 illustrates a schematic structural diagram of a sensing device 2500 provided in an exemplary embodiment of the present application, including a receiver 2501. Optionally, the sensing device 2500 further includes at least one of: a transmitter 2502, a processor 2503, a memory 2504, or a bus (not illustrated in the figure). The sensing device 2500 may be configured to perform some or all of the steps performed by the aforementioned terminal device, and the sensing device 2500 may also be configured to perform some or all of the steps performed by the aforementioned access network device.

The receiver 2501 is configured to implement a receiving function, and the transmitter 2502 is configured to implement a transmitting function.

In some embodiments, the receiver 2501 and the transmitter 2502 may be implemented as a communication component, the communication component may be a communication chip, and the communication component may be referred to as a transceiver. In some embodiments, the receiver 2501 may be configured to implement the functions and steps of the receiving module 2210 and/or the receiving module 2310, and the transmitter 2502 may be configured to implement the functions and steps of the transmitting module 2230 and/or the transmitting module 2330.

In some embodiments, the receiver 2501 and the transmitter 2502 may be implemented as a wireless communication component.

The processor 2503 includes one or more processing cores. The processor 2503 executes various functional applications and information processing by running software programs and modules. In some embodiments, the processor 2503 may be configured to implement the functions and steps of the processing module 2250 and/or the processing module 2350.

The memory 2504 may be configured to store computer programs executed by the processor 2503, and a processor 1401 is configured to execute the computer programs to implement the various steps in the aforementioned method embodiments.

In some embodiments, the memory 2504 may be connected to the processor 2503 as well as the receiver 2501 and the transmitter 2502.

Furthermore, the memory 2504 may be implemented by any type of volatile or non-volatile storage devices or a combination thereof. The volatile or non-volatile storage devices include, but are not limited to: a magnetic disk or an optical disc, an electrically-erasable programmable read only memory (EEPROM), an erasable programmable read only memory (EPROM), a static random access memory (SRAM), a read-only memory (ROM), a magnetic memory, a flash memory, or a programmable read-only memory (PROM).

In some embodiments, the receiver 2501 independently performs reception of signal/data, or the processor 2503 controls the receiver 2501 to perform reception of signal/data, or the processor 2503 requests the receiver 2501 to perform reception of signal/data, or the processor 2503 cooperates with the receiver 2501 to perform reception of signal/data.

In some embodiments, the transmitter 2502 independently performs transmission of signal/data, or the processor 2503 controls the transmitter 2502 to perform transmission of signal/data, or the processor 2503 requests the transmitter 2502 to perform transmission of signal/data, or the processor 2503 cooperates with the transmitter 2502 to perform transmission of signal/data.

For details not described in detail in this embodiment, please refer to the above embodiments, which will not be repeated here.

FIG. 26 illustrates a schematic structural diagram of a sensing device 2600 provided in an exemplary embodiment of the present application, including a transmitter 2601. Optionally, the sensing device 2600 further includes at least one of: a receiver 2602, a processor 2603, a memory 2604, or a bus (not illustrated in the figure). The sensing device 2600 may also be configured to perform some or all of the steps performed by the core network element.

The transmitter 2601 is configured to implement a transmitting function, and the receiver 2602 is configured to implement a receiving function.

In some embodiments, the receiver 2602 and the transmitter 2601 may be implemented as a communication component, the communication component may be a communication chip, and the communication component may be referred to as a transceiver. In some embodiments, the receiver 2602 may be configured to implement the functions and steps of the receiving module 2430, and the transmitter 2601 may be configured to implement the functions and steps of the transmitting module 2410.

In some embodiments, the receiver 2602 and the transmitter 2601 may be implemented as a wireless communication component and/or a wired communication component.

The processor 2603 includes one or more processing cores, and the processor 2603 executes various functional applications and information processing by running software programs and modules. In some embodiments, the processor 2603 may be configured to implement the functions and steps of the processing module 2450.

The memory 2604 may be configured to store computer programs executed by processor 2603, and the processor 2603 is configured to execute the computer programs to implement the various steps in the aforementioned method embodiments.

In some embodiments, the memory 2604 may be connected to the processor 2603, as well as to the transmitter 2601 and the receiver 2602.

Furthermore, the memory 2604 may be implemented by any type of volatile or non-volatile storage devices, or a combination thereof, the volatile or non-volatile storage devices include, but are not limited to: a magnetic disk or an optical disc, an EEPROM, an EPROM, an SRAM, an ROM, a magnetic memory, a flash memory, or a PROM.

In some embodiments, the receiver 2602 independently performs reception of signal/data, or the processor 2603 controls the receiver 2602 to perform reception of signal/data, or the processor 2603 requests the receiver 2602 to perform reception of signal/data, or the processor 2603 cooperates with the receiver 2602 to perform reception of signal/data.

In some embodiments, the transmitter 2601 independently performs transmission of signal/data, or the processor 2603 controls the transmitter 2601 to perform transmission of signal/data, or the processor 2603 requests the transmitter 2601 to perform transmission of signal/data, or the processor 2603 cooperates with the transmitter 2601 to perform transmission of signal/data.

For details not described in detail in this embodiment, please refer to the above embodiments, which will not be repeated here.

In an exemplary embodiment of the present application, a chip is further provided. The chip includes a programmable logic circuit and/or program instructions, and the chip, when running on a communication device, is configured to implement the sensing method provided in the aforementioned various method embodiments.

In some embodiments, the chip includes the receiving module 2210. Optionally, the apparatus further includes at least a portion of the transmitting module 2230 and/or the processing module 2250. For relevant details of the receiving module 2210, the transmitting module 2230, and the processing module 2250, please refer to the preceding description, which will not be repeated here.

In some embodiments, the chip includes the receiving module 2310. Optionally, the apparatus further includes the transmitting module 2330 and/or the processing module 2350. For relevant details of the receiving module 2310, the transmitting module 2330, and the processing module 2350, please refer to the preceding description, which will not be repeated here.

In some embodiments, the chip includes the transmitting module 2410. Optionally, the chip further includes the receiving module 2430 and/or the processing module 2450. For relevant details of the transmitting module 2410, the receiving module 2430, and/or the processing module 2450, please refer to the preceding description, which will not be repeated here.

In an exemplary embodiment of the present application, a computer-readable storage medium is further provided. The computer-readable storage medium stores a computer program, and the computer program, when executed by a processor, implements the aforementioned sensing method.

In an exemplary embodiment of the present application, a computer program product is further provided, the computer program product, when executed by a processor, is configured to implement the aforementioned sensing method.

In an exemplary embodiment of the present application, a computer program is further provided. The computer program includes computer instructions, and a processor of a computer device executes the computer instructions, enabling the computer device to perform the aforementioned sensing method.

Those skilled in the art may understand that all or part of the steps of the aforementioned embodiments may be completed by hardware, or by a program instructing relevant hardware. The program may be stored in a computer-readable storage medium. The aforementioned storage medium may be a read-only memory, a magnetic disk, or an optical disk, etc.

The above descriptions are merely optional embodiments of the present application and are not intended to limit the present application. Any modifications, equivalent substitutions, and improvements made within the spirit and principles of the present application shall fall within the protection scope of the present application.

## Claims

1. A sensing method, performed by a terminal device and comprising:
receiving first information, wherein the first information comprises configuration information related to sensing.

2. The method according to claim 1, wherein the first information comprises at least one of: sensing measurement configuration information, sensing assistance information used for calculation, or configuration information used for switching a sensing mode.

3. The method according to claim 2, wherein the sensing measurement configuration information comprises at least one of: a sensing measurement quantity, a measurement configuration, a reporting configuration, sensing quality of service (QoS) information, or reception configuration information of a sensing signal.

4. The method according to any one of claims 1 to 3, further comprising:
transmitting second information, wherein the second information comprises capability information related to sensing of the terminal device and/or preference information related to sensing of the terminal device.

5. The method according to claim 4, wherein the second information comprises at least one of:
whether the terminal device supports a first sensing mode, wherein the first sensing mode is a terminal device-based sensing mode; whether the terminal device supports a second sensing mode, wherein the second sensing mode is a core network element-based sensing mode; a type of sensing data supported by the terminal device for reporting; sensing data supported by the terminal device for reporting; a sensing performance indicator supported by the terminal device; a sensing mode preferred by the terminal device; a type of sensing data preferred by the terminal device; sensing data preferred by the terminal device; a sensing performance indicator preferred by the terminal device; or a current power saving class of the terminal device.

6. The method according to claim 5, wherein
the type of sensing data comprises at least one of: raw sensing data, preliminary sensing data, intermediate sensing data, or a sensing result; and/or, the sensing data comprises at least one of: velocity, delay, Doppler shift, an angle, signal strength, distance, orientation, or acceleration; and/or, the sensing performance indicator comprises at least one of: sensing service delay, refresh rate, or sensing accuracy.

7. The method according to any one of claims 4 to 6, further comprising: receiving third information, wherein the third information is used to request or configure the terminal device to transmit the second information.

8. The method according to claim 7, wherein
the third information comprises sensing capabilities request information, and the second information comprises a sensing capabilities report; or
the third information comprises radio resource control (RRC) reconfiguration information, and the second information comprises terminal device assistance information.

9. The method according to claim 8, further comprising:
in a case where the RRC reconfiguration information comprises a first information element, and the first information element is used to configure the terminal device to transmit the second information, starting a first timer, wherein the first timer is related to a sensing switching request message.

10. The method according to claim 8 or 9, further comprising:
in a case where the RRC reconfiguration information comprises a first information element, and the first information element is not used to configure the terminal device to transmit the second information, stopping a first timer, wherein the first timer is related to a sensing switching request message.

11. The method according to any one of claims 1 to 10, further comprising:
transmitting a sensing switching request message, wherein the sensing switching request message is used to request switching of a sensing mode.

12. The method according to any one of claims 1 to 11, further comprising:
in a case where the first information comprises configuration information used for switching a sensing mode, performing switching of the sensing mode based on the configuration information used for switching the sensing mode.

13. The method according to claim 2 or 12, wherein the configuration information used for switching the sensing mode comprises at least one of: configuration information of a first sensing mode; configuration information of a second sensing mode; first acknowledgment (ACK) information, used to indicate that the terminal device is allowed to switch the sensing mode; first negative acknowledgment (NACK) information, used to indicate that the terminal device is not allowed to switch the sensing mode; configuration information of a first timer, wherein the first timer is related to a sensing switching request message; or switching condition information of the sensing mode.

14. The method according to claim 13, further comprising at least one of:
in a case where the configuration information used for switching the sensing mode comprises the configuration information of the first sensing mode, switching the sensing mode to the first sensing mode;
in a case where the configuration information used for switching the sensing mode comprises the configuration information of the second sensing mode, switching the sensing mode to the second sensing mode;
in a case where the configuration information used for switching the sensing mode comprises the first ACK information, performing switching of the sensing mode; or
in a case where the configuration information used for switching the sensing mode comprises the first NACK information, not performing switching of the sensing mode.

15. The method according to claim 9, 10 or 13, further comprising at least one of:
in a case where first NACK information is received, starting the first timer, wherein the first NACK information is used to indicate that the terminal device is not allowed to switch a sensing mode;
in a case where first ACK information is received, stopping the first timer, wherein the first ACK information is used to indicate that the terminal device is allowed to switch the sensing mode;
in a case where second information is transmitted, starting the first timer, wherein the second information comprises capability information related to sensing of the terminal device and/or preference information related to sensing of the terminal device;
during running of the first timer, not transmitting the second information;
after the first timer expires, transmitting the second information;
in a case where a sensing switching request message is transmitted, stopping the first timer;
during running of the first timer, not transmitting a sensing switching request message; or
after the first timer expires, transmitting a sensing switching request message.

16. The method according to claim 13, wherein the switching condition information of the sensing mode comprises at least one of: a first threshold, related to sensing calculation complexity; or a second threshold, related to an amount of uplink sensing data.

17. The method according to claim 16, further comprising at least one of:
in a case where current sensing calculation complexity is less than or equal to the first threshold, switching from the second sensing mode to the first sensing mode; in a case where current sensing calculation complexity is greater than the first threshold, switching from the first sensing mode to the second sensing mode; in a case where a current amount of uplink sensing data is less than or equal to the second threshold, switching from the first sensing mode to the second sensing mode; or in a case where a current amount of uplink sensing data is greater than the first threshold, switching from the second sensing mode to the first sensing mode.

18. The method according to claim 16 or 17, further comprising at least one of:
in a case where current sensing calculation complexity is less than or equal to the first threshold, reporting a sensing result based on the first sensing mode;
in a case where current sensing calculation complexity is greater than the first threshold, transmitting sensing data;
in a case where a current amount of uplink sensing data is less than or equal to the second threshold, transmitting sensing data; or
in a case where a current amount of uplink sensing data is greater than the second threshold, reporting a sensing result based on the first sensing mode.

19. The method according to any one of claims 1 to 18, further comprising:
obtaining sensing data and/or a sensing result based on the first information; and
reporting the sensing data and/or the sensing result.

20. The method according to claim 18 or 19, wherein the sensing data and/or the sensing result are carried in a sensing information report.

21. The method according to claim 20, wherein the sensing information report is further used to implicitly indicate that the terminal device has switched the sensing mode.

22. The method according to any one of claims 1 to 20, further comprising:
transmitting a notification message, wherein the notification message is used to explicitly indicate that the terminal device has switched a sensing mode.

23. A sensing method, performed by an access network device and comprising:
receiving first information, wherein the first information comprises configuration information related to sensing.

24. The method according to claim 23, wherein the first information comprises at least one of: sensing measurement configuration information, sensing assistance information used for calculation, or configuration information used for switching a sensing mode.

25. The method according to claim 24, wherein the sensing measurement configuration information comprises at least one of: a sensing measurement quantity, a measurement configuration, a reporting configuration, sensing quality of service (QoS) information, or reception configuration information of a sensing signal.

26. The method according to any one of claims 23 to 25, further comprising:
transmitting sensing assistance information, wherein the sensing assistance information is generated according to second information and/or fourth information,
wherein the second information comprises capability information related to sensing of a terminal device and/or preference information related to sensing of the terminal device, and the fourth information comprises capability information related to sensing of the access network device and/or preference information related to sensing of the access network device.

27. The method according to claim 26, wherein the fourth information comprises at least one of:
whether the access network device supports a first sensing mode, wherein the first sensing mode is a terminal device-based sensing mode; whether the access network device supports a second sensing mode, wherein the second sensing mode is a core network element-based sensing mode; a type of sensing data supported by the access network device for reporting; sensing data supported by the access network device for reporting; a sensing performance indicator supported by the access network device; a sensing mode preferred by the access network device; a type of sensing data preferred by the access network device; sensing data preferred by the access network device; a sensing performance indicator preferred by the access network device; or air interface resource overhead information of the access network device.

28. The method according to claim 26 or 27, further comprising: receiving the second information,
wherein the second information comprises at least one of: whether the terminal device supports a first sensing mode, wherein the first sensing mode is a terminal device-based sensing mode; whether the terminal device supports a second sensing mode, wherein the second sensing mode is a core network element-based sensing mode; a type of sensing data supported by the terminal device for reporting; sensing data supported by the terminal device for reporting; a sensing performance indicator supported by the terminal device; a sensing mode preferred by the terminal device; a type of sensing data preferred by the terminal device; sensing data preferred by the terminal device; a sensing performance indicator preferred by the terminal device; or a current power saving class of the terminal device.

29. The method according to claim 27 or 28, wherein
the type of sensing data comprises at least one of: raw sensing data, preliminary sensing data, intermediate sensing data, or a sensing result; and/or, the sensing data comprises at least one of: velocity, delay, Doppler shift, an angle, signal strength, distance, orientation, or acceleration; and/or, the sensing performance indicator comprises at least one of: sensing service delay, refresh rate, or sensing accuracy.

30. The method according to any one of claims 23 to 29, further comprising: receiving third information, wherein the third information is used to request or configure a terminal device to transmit second information.

31. The method according to claim 30, wherein the third information comprises sensing capabilities request information, and the second information comprises a sensing capabilities report; or, the third information comprises radio resource control (RRC) reconfiguration information, and the second information comprises terminal device assistance information.

32. The method according to any one of claims 23 to 31, further comprising:
transmitting a sensing switching request message, wherein the sensing switching request message is used to request switching of a sensing mode.

33. The method according to any one of claims 23 to 32, further comprising:
in a case where the first information comprises configuration information used for switching a sensing mode, performing switching of the sensing mode based on the configuration information used for switching the sensing mode.

34. The method according to claim 24 or 33, wherein the configuration information used for switching the sensing mode comprises at least one of: second acknowledgment (ACK) information, used to indicate that the access network device is allowed to switch the sensing mode; second negative acknowledgment (NACK) information, used to indicate that the access network device is not allowed to switch the sensing mode; configuration information of a first sensing mode; or configuration information of a second sensing mode.

35. The method according to claim 34, further comprising at least one of:
in a case where the configuration information used for switching the sensing mode comprises the configuration information of the first sensing mode, switching the sensing mode to the first sensing mode;
in a case where the configuration information used for switching the sensing mode comprises the configuration information of the second sensing mode, switching the sensing mode to the second sensing mode;
in a case where the configuration information used for switching the sensing mode comprises the second ACK information, performing switching of the sensing mode; or
in a case where the configuration information used for switching the sensing mode comprises the second NACK information, not performing switching of the sensing mode.

36. The method according to any one of claims 23 to 35, further comprising:
obtaining sensing data and/or a sensing result based on the first information; and
reporting the sensing data and/or the sensing result.

37. The method according to claim 35, wherein obtaining the sensing data and/or the sensing result based on the first information comprises: receiving the sensing data and/or the sensing result from a terminal device based on the first information.

38. A sensing method, performed by a core network element and comprising:
transmitting first information, wherein the first information comprises configuration information related to sensing.

39. The method according to claim 38, wherein the first information comprises at least one of: sensing measurement configuration information, sensing assistance information used for calculation, or configuration information used for switching a sensing mode.

40. The method according to claim 39, wherein the sensing measurement configuration information comprises at least one of: a sensing measurement quantity, a measurement configuration, a reporting configuration, sensing quality of service (QoS) information, or reception configuration information of a sensing signal.

41. The method according to any one of claims 38 to 40, further comprising:
receiving at least one of: second information, fourth information, or sensing assistance information,
wherein the second information comprises capability information related to sensing of a terminal device and/or preference information related to sensing of the terminal device, the fourth information comprises capability information related to sensing of an access network device and/or preference information related to sensing of the access network device, and the sensing assistance information is generated according to the second information and/or the fourth information.

42. The method according to claim 41, wherein the second information comprises at least one of:
whether the terminal device supports a first sensing mode, wherein the first sensing mode is a terminal device-based sensing mode; whether the terminal device supports a second sensing mode, wherein the second sensing mode is a core network element-based sensing mode; a type of sensing data supported by the terminal device for reporting; sensing data supported by the terminal device for reporting; a sensing performance indicator supported by the terminal device; a sensing mode preferred by the terminal device; a type of sensing data preferred by the terminal device; sensing data preferred by the terminal device; a sensing performance indicator preferred by the terminal device; or a current power saving class of the terminal device.

43. The method according to claim 41, wherein the fourth information comprises at least one of:
whether the access network device supports a first sensing mode, wherein the first sensing mode is a terminal device-based sensing mode; whether the access network device supports a second sensing mode, wherein the second sensing mode is a core network element-based sensing mode; a type of sensing data supported by the access network device for reporting; sensing data supported by the access network device for reporting; a sensing performance indicator supported by the access network device; a sensing mode preferred by the access network device; a type of sensing data preferred by the access network device; sensing data preferred by the access network device; a sensing performance indicator preferred by the access network device; or air interface resource overhead information of the access network device.

44. The method according to claim 42 or 43, wherein
the type of sensing data comprises at least one of: raw sensing data, preliminary sensing data, intermediate sensing data, or a sensing result; and/or, the sensing data comprises at least one of: velocity, delay, Doppler shift, an angle, signal strength, distance, orientation, or acceleration; and/or, the sensing performance indicator comprises at least one of: sensing service delay, refresh rate, or sensing accuracy.

45. The method according to any one of claims 41 to 44, further comprising: transmitting third information, wherein the third information is used to request or configure the terminal device to transmit the second information.

46. The method according to claim 45, wherein the third information comprises sensing capabilities request information, and the second information comprises a sensing capabilities report; or, the third information comprises radio resource control (RRC) reconfiguration information, and the second information comprises terminal device assistance information.

47. The method according to claim 39, wherein the configuration information used for switching the sensing mode comprises at least one of: configuration information of a first sensing mode; configuration information of a second sensing mode; first acknowledgment (ACK) information, used to indicate that a terminal device is allowed to switch the sensing mode; first negative acknowledgment (NACK) information, used to indicate that the terminal device is not allowed to switch the sensing mode; configuration information of a first timer, wherein the first timer is related to a sensing switching request message; switching condition information of the sensing mode; second ACK information, used to indicate that an access network device is allowed to switch the sensing mode; or second NACK information, used to indicate that the access network device is not allowed to switch the sensing mode.

48. The method according to any one of claims 38 to 47, further comprising:
receiving a sensing switching request message, wherein the sensing switching request message is used to request switching of a sensing mode.

49. The method according to any one of claims 38 to 48, further comprising:
receiving sensing data, wherein the sensing data is obtained based on the first information; and
obtaining a sensing result based on the sensing data.

50. The method according to any one of claims 38 to 48, further comprising:
receiving a sensing result, wherein the sensing result is obtained based on the first information.

51. The method according to any one of claims 38 to 50, wherein the core network element comprises a sensing function (SF) or a location management function (LMF).

52. A sensing apparatus, comprising:
a receiving module, configured to receive first information, wherein the first information comprises configuration information related to sensing.

53. A sensing apparatus, comprising:
a transmitting module, configured to transmit first information, wherein the first information comprises configuration information related to sensing.

54. A sensing device, comprising: a processor, a transceiver connected to the processor, and a memory configured to store executable instructions of the processor, wherein the processor is configured to load and execute the executable instructions to implement the sensing method according to any one of claims 1 to 22.

55. A sensing device, comprising: a processor, a transceiver connected to the processor, and a memory configured to store executable instructions of the processor, wherein the processor is configured to load and execute the executable instructions to implement the sensing method according to any one of claims 23 to 37.

56. A sensing device, comprising: a processor, a transceiver connected to the processor, and a memory configured to store executable instructions of the processor, wherein the processor is configured to load and execute the executable instructions to implement the sensing method according to any one of claims 38 to 51.

57. A computer-readable storage medium, wherein the storage medium stores a computer program, the computer program is configured to be executed by a processor to implement the sensing method according to any one of claims 1 to 22, or to implement the sensing method according to any one of claims 23 to 37, or to implement the sensing method according to any one of claims 38 to 51.

58. A chip, comprising a programmable logic circuit and/or program instructions, and when running, the chip is configured to implement the sensing method according to any one of claims 1 to 22, or to implement the sensing method according to any one of claims 23 to 37, or to implement the sensing method according to any one of claims 38 to 51.

59. A computer program product, comprising computer instructions, wherein the computer instructions are stored in a computer-readable storage medium, a processor obtains the computer instructions from the computer-readable storage medium and executes the computer instructions to implement the sensing method according to any one of claims 1 to 22, or to implement the sensing method according to any one of claims 23 to 37, or to implement the sensing method according to any one of claims 38 to 51.
